(19) Europäisches Patentamt
European Patent Office
Office européen des brevets

(11) EP 4 020 651 A1

# (12) EUROPEAN PATENT APPLICATION

published in accordance with Art. 153(4) EPC

(43) Date of publication:
**29.06.2022 Bulletin 2022/26**

(21) Application number: **19958017.6**

(22) Date of filing: **25.12.2019**

(51) International Patent Classification (IPC):
***H01M 10/056*** *(2010.01)* ***H01M 4/583*** *(2010.01)*

(52) Cooperative Patent Classification (CPC):
**H01M 4/583; H01M 10/056;** Y02E 60/10

(86) International application number:
**PCT/CN2019/128445**

(87) International publication number:
**WO 2021/128093 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventor: **WANG, Kefei**
**Ningde, Fujian 352100 (CN)**

(74) Representative: **Klunker IP Patentanwälte PartG mbB**
**Destouchesstraße 68**
**80796 München (DE)**

## (54) ELECTROCHEMICAL DEVICE AND ELECTRONIC DEVICE COMPRISING SAME

(57) The present application relates to an electrochemical device and an electronic device including the same. In particular, the present application provides an electrochemical device, including a cathode, an electrolyte, and an anode, wherein the electrolyte includes a phosphorus- and oxygen-containing compound, the anode includes an anode current collector and an anode mixture layer formed on the anode current collector, and after 100 charge and discharge cycles, an area of lithium precipitation of the surface of the anode mixture layer is 2% or below based on a total surface area of the anode mixture layer. The electrochemical device of the present application has improved cycle performance, storage performance and safety performance.



Processed by Luminess, 75001 PARIS (FR)

## Description

## BACKGROUND

### 1. Technical Field

The present application relates to the field of energy storage technologies, in particular to an electrochemical device and an electronic device including the same, and more particularly to a lithium-ion battery.

### 2. Description of the Related Art

With the development of technologies and the increasing demand for mobile devices, the demand for electrochemical devices (e.g., lithium-ion batteries) has increased significantly. Lithium-ion batteries with high energy density and excellent service life and cycle performance are one research direction.

The theoretical capacity of a lithium-ion battery may vary with the type of the anode active material. As cycles progress, lithium-ion batteries generally have a decrease in charge/discharge capacity, causing the deterioration in performance of the lithium-ion batteries. In recent years, in the manufacture of lithium-ion batteries, in order to reduce environmental impact and the like, aqueous slurry compositions using an aqueous medium as a dispersion medium have received more and more attention, but such aqueous slurries may have defects such as the formation of multiple pinholes and pits in the active substance layer due to the presence of bubbles in the slurry composition, affecting the cycling and high-temperature storage performance of the electrochemical device.

In view of this, it is indeed necessary to provide an improved electrochemical device having improved cycle performance, storage performance and high safety performance and an electronic device including the same.

## SUMMARY

The embodiments of the present application provide an electrochemical device and an electronic device including the same to resolve at least one of the problems in the related art.

According to an aspect of the present application, the present application provides an electrochemical device, including a cathode, an electrolyte, and an anode, wherein the electrolyte includes a phosphorus- and oxygen-containing compound, the anode includes an anode current collector and an anode mixture layer formed on the anode current collector, and after 100 charge and discharge cycles, an area of lithium precipitation of a surface of the anode mixture layer is 2% or below based on a total surface area of the anode mixture layer.

According to some embodiments of the present application, the electrolyte includes at least one of the following compounds:

(a) lithium monofluorophosphate;

(b) lithium difluorophosphate;

(c) phosphate;

(d) phosphocyclic anhydride; or

(e) a compound of Formula 1:

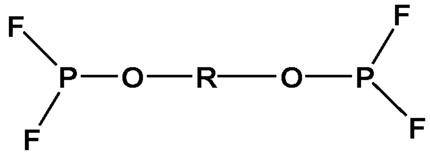
Formula 1

wherein R is substituted or unsubstituted $C_1$-$C_{10}$ hydrocarbyl, wherein when substituted, the substituent is halo,

According to some embodiments of the present application, the electrolyte includes the compound of Formula 1, and the compound of Formula 1 includes at least one of the following structural formulas:

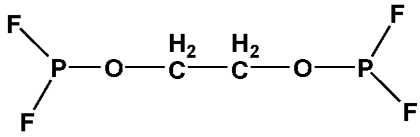
Formula 1a;

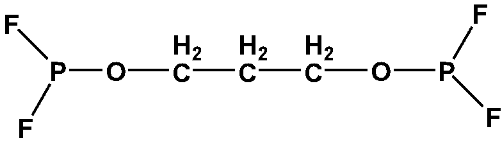
Formula 1b;

or

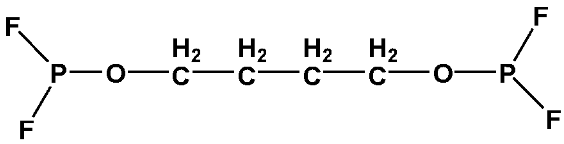
Formula 1c.

According to some embodiments of the present application, the electrolyte includes phosphate, and the phosphate has the structure of Formula 2:

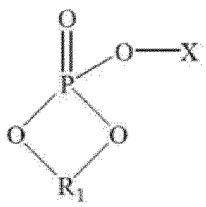
Formula 2

wherein X is a linear or non-linear alkyl group having 1 to 5 carbon atoms or $-SiR_2R_3R_4$, wherein $R_2$, $R_3$, and $R_4$ are each independently an alkyl group having 1 to 5 carbon atoms, and

$R_1$ is an alkylene group having 2 to 3 carbon atoms and substituted with a substituent selected from the following: at least one fluorine atom or an alkyl group containing at least one fluorine atom and having 1 to 3 carbon atoms.

According to some embodiments of the present application, the content of the phosphorus- and oxygen-containing compound is 0.001 wt% to 10 wt% based on the total weight of the electrolyte.

According to some embodiments of the present application, the anode mixture layer includes a carbon material, and the carbon material has at least one of the following characteristics:

(a) a specific surface area of less than 5 $m^2/g$;

(b) a median particle size of 5 μm to 30 μm; and

(c) amorphous carbon on a surface.

According to some embodiments of the present application, the anode mixture layer has at least one of the following characteristics:

(a) a thickness of not greater than 200 μm;

(b) a porosity of 10% to 60%; and

(c) a minimum height from which a ball having a diameter of 15 mm and a weight of 12 g falls onto the anode mixture layer to cause the formation of cracks on the anode mixture layer being 50 cm or above.

According to some embodiments of the present application, the anode mixture layer includes an auxiliary agent, and the auxiliary agent has at least one of the following characteristics:

(a) includes polyether siloxane;

(b) an oxidation potential of not less than 4.5 V and a reductive potential of not greater than 0.5 V; and

(c) a surface tension of an aqueous solution containing 0.1 wt% of the auxiliary agent being not greater than 30 mN/m.

According to some embodiments of the present application, based on a total weight of the anode mixture layer, the content of the auxiliary agent is 3000 ppm or below.

According to another aspect of the present application, the present application provides an electronic device including the electrochemical device according to the present application.

Additional aspects and advantages of the embodiments of the present application will be described or shown in the following description or interpreted by implementing the embodiments of the present application.

## DETAILED DESCRIPTION

The embodiments of the present application will be described in detail below. The embodiments of the present application should not be interpreted as limitations to the present application.

Unless otherwise expressly indicated, the following terms used herein have the meanings indicated below.

In specific embodiments and claims of the present application, a list of items connected by the term "at least one of' or other similar terms may mean any combination of the listed items. For example, if items A and B are listed, then the phrase "at least one of A and B" means only A; only B; or A and B. In another example, if items A, B, and C are listed, then the phrase "at least one of A, B, and C" means only A; only B; only C; A and B (excluding C); A and C (excluding B); B and C (excluding A); or A, B, and C. Item A may include a single or multiple elements. Item B may include a single or multiple elements. Item C may include a single or multiple elements. The term "at least one of' has the same meaning as the term "at least one kind of'.

As used herein, the term "hydrocarbyl group" encompasses alkyl, alkenyl, and alkynyl groups.

As used herein, the term "alkyl group" is intended to be a linear saturated hydrocarbon structure having 1 to 20 carbon atoms. The "alkyl group" is also expected to be a branched chain or cyclic hydrocarbon structure having 3 to 20 carbon atoms. When an alkyl group having a specific number of carbon atoms is defined, it is intended to cover all geometric isomers having the carbon number. Therefore, for example, "butyl" means n-butyl, sec-butyl, isobutyl, tert-butyl and cyclobutyl; and "propyl" includes n-propyl, isopropyl and cyclopropyl. Examples of the alkyl group include, but are not limited to, methyl, ethyl, n-propyl, isopropyl, cyclopropyl, n-butyl, isobutyl, sec-butyl, tert-butyl, cyclobutyl, n-pentyl, isoamyl, neopentyl, cyclopentyl, methylcyclopentyl, ethylcyclopentyl, n-hexyl, isohexyl, cyclohexyl, n-heptyl, octyl, cyclopropyl, cyclobutyl, norbornanyl and so on.

As used herein, the term "alkenyl group" refers to a monovalent unsaturated hydrocarbyl group which may be straight or branched and which has at least one and usually 1, 2 or 3 carbon-carbon double bonds. Unless otherwise defined, the alkenyl group typically contains 2 to 20 carbon atoms and includes, for example, -$C_{2-4}$ alkenyl, -$C_{2-6}$ alkenyl and-$C_{2-10}$ alkenyl. Representative alkenyl groups include (for example) ethenyl, n-propenyl, isopropenyl, n-but-2-enyl, but-3-enyl, n-hex-3-enyl and the like.

As used herein, the term "alkynyl group" refers to a monovalent unsaturated hydrocarbyl group which may be linear-chain or branched-chain and has at least one and usually has 1, 2 or 3 carbon-carbon triple bonds. Unless otherwise defined, the alkynyl group typically contains 2 to 20 carbon atoms and includes, for example, -$C_{2-4}$ alkynyl, -$C_{3-6}$ alkynyl and -$C_{3-10}$ alkynyl. Representative alkynyl groups include (for example) ethynyl, prop-2-ynyl(n-propynyl), n-but-2-ynyl, n-hex-3-ynyl and the like.

As used herein, the term "alkylene group" means a linear or branched divalent saturated hydrocarbyl group. Unless otherwise defined, the alkylene group typically contains 2 to 10 carbon atoms and includes (for example) -$C_{2-3}$ alkylene and -$C_{2-6}$ alkylene. Representative alkylene groups include (for example) methylene, ethane-1,2-diyl ("ethylene"), propane-1,2-diyl, propane-1,3-diyl, butane-1, 4-diyl, pentane-1,5-diyl and the like.

The term "aryl" refers to a monovalent aromatic hydrocarbon with a monocycle (for example, phenyl) or fused cycle. The fused ring system includes a completely unsaturated ring system (for example, naphthalene) and a partially unsaturated ring system (for example, 1,2,3,4-tetrahydronaphthalene). Unless otherwise defined, the aryl group typically contains 6 to 26 ring carbon atoms and includes (for example) -$C_{6-10}$ aryl. Representative aryl groups include (for example) phenyl, methylphenyl, propylphenyl, isopropylphenyl, benzyl and naphthalen-1-yl, naphthalen-2-yl and the like.

As used herein, the term "halo" refers to a stable atom belonging to Group 17 of the periodic table of the elements, such as fluorine, chlorine, bromine, or iodine.

The theoretical capacity of an electrochemical device (e.g., a lithium-ion battery) may vary with the type of the anode active material. As cycles progress, the electrochemical device generally has a decrease in charge/discharge capacity. This is because the electrode interface of the electrochemical device changes during charging and discharging,

resulting in that the electrode active substance cannot perform its function.

The present application uses a combination of a particular anode material and a particular electrolyte to ensure the interface stability of the electrochemical device during the cycles, thereby improving the cycle performance and high-temperature storage performance of the electrochemical device.

The particular anode material of the present application is achieved by controlling the area of lithium precipitation of the surface of the anode active material layer. As a method for controlling the area of lithium precipitation, an auxiliary agent may be added to the anode slurry or an auxiliary agent coating may be formed on the surface of the anode active material layer. The area of lithium precipitation may also be controlled by adjusting the formulation of the electrolyte, adding an additive having a special structure, adjusting the compacted density of the cathode and anode or adjusting the proportion of the cathode active material.

In one embodiment, the present application provides an electrochemical device, including a cathode, an anode and an electrolyte as described below.

## I. Anode

The anode includes an anode current collector and an anode mixture layer disposed on one or two surfaces of the anode current collector.

### 1. Anode mixture layer

The anode mixture layer includes an anode active material layer, and the anode active material layer includes an anode active material. There may be one or more anode mixture layers, and each of the plurality of layers of anode active materials may include the same or different anode active materials. The anode active material is any substance capable of reversibly intercalating and deintercalating metal ions such as lithium ions. In some embodiments, the chargeable capacity of the anode active material is greater than the discharge capacity of the cathode active material to prevent lithium metal from unintentionally precipitating on the anode during charging.

#### (1) Area of lithium precipitation

One of the main features of the electrochemical device of the present application lies in that after 100 charge and discharge cycles, the area of lithium precipitation of the surface of the anode mixture layer is 2% or below based on the total surface area of the anode mixture layer. In some embodiments, after 100 charge and discharge cycles, the area of lithium precipitation of the surface of the anode mixture layer is 1% or below based on the total surface area of the anode mixture layer. In some embodiments, after 100 charge and discharge cycles, the area of lithium precipitation of the surface of the anode mixture layer is 0.5% or below based on the total surface area of the anode mixture layer.

The area of lithium precipitation of the anode mixture layer can reflect the surface properties of the anode mixture layer and is one of the physical and chemical parameters characterizing the anode mixture layer. The smaller the area of lithium precipitation is, the smoother the surface of the anode mixture layer is, and the fewer the defects such as pinholes or pits are, so that the cycle performance and high-temperature storage performance of the electrochemical device can be significantly improved. The area of lithium precipitation of the anode mixture layer may be affected by many factors, mainly including the auxiliary agent and the porosity of the anode mixture layer.

When the anode mixture layer has the above area of lithium precipitation, a mixture layer interface with good stability can be obtained, so that the lithium-ion battery has improved cycle performance, storage performance and safety performance in charge and discharge cycles.

#### (2) Contact angle

According to some embodiments of the present application, as measured using a contact angle measurement method, the contact angle of the anode mixture layer relative to the non-aqueous solvent is not greater than 60°. In some embodiments, as measured using a contact angle measurement method, the contact angle of the anode mixture layer relative to the non-aqueous solvent is not greater than 50°. In some embodiments, as measured using a contact angle measurement method, the contact angle of the anode mixture layer relative to the non-aqueous solvent is not greater than 30°. When the anode mixture layer has the above angle relative to the non-aqueous solvent, the interface of the anode mixture layer has few defects and has good stability during the charging and discharging cycles of the electrochemical device, thereby ensuring the cycle performance and high-temperature storage performance of the electrochemical device.

According to some embodiments of the present application, the contact angle measurement method is dropping 3 μL of a diethyl carbonate droplet onto the surface of the anode mixture layer and testing, within 100 seconds after the

dropping, the contact angle of the droplet on the surface of the anode mixture layer.

According to some embodiments of the present application, as measured using the contact angle measurement method, the droplet diameter of the non-aqueous solvent on the anode mixture layer is not greater than 30 mm. In some embodiments, as measured using the contact angle measurement method, the droplet diameter of the non-aqueous solvent on the anode mixture layer is not greater than 20 mm. In some embodiments, as measured using the contact angle measurement method, the droplet diameter of the non-aqueous solvent on the anode mixture layer is not greater than 15 mm. In some embodiments, as measured using the contact angle measurement method, the droplet diameter of the non-aqueous solvent on the anode mixture layer is not greater than 10 mm. When the anode mixture layer has the above contact angle relative to the non-aqueous solvent and the non-aqueous solvent has the above droplet diameter, the cycle performance and high-temperature storage performance of the electrochemical device can be further improved.

The contact angle of the anode mixture layer relative to the non-aqueous solvent and the droplet diameter of the non-aqueous solvent may be measured using the following method: dropping 3 μL of diethyl carbonate onto the surface of the anode mixture layer, testing the droplet diameter by using a JC2000D3E contact angle goniometer within 100 seconds, and applying a 5-point fitting method (i.e., two points on the left and right planes of the droplet are selected first, the liquid-solid junction is determined, and then three points on the droplet arc are selected) for fitting to obtain the contact angle of the anode mixture layer relative to the non-aqueous solvent. Each sample is measured at least three times, at least three pieces of data which differ from each other by less than 5° are selected, and an average value is calculated, thus obtaining the contact angle of the anode mixture layer relative to the non-aqueous solvent. The non-aqueous solvent used for contact angle testing may be a commonly used electrolyte solvent such as diethyl carbonate, ethyl methyl carbonate, dimethyl carbonate, methyl propyl carbonate, or methyl isopropyl carbonate.

(3) Carbon material

According to some embodiments of the present application, the anode mixture layer includes a carbon material.

According to some embodiments of the present application, the carbon mixture layer includes at least one of artificial graphite, natural graphite, mesocarbon microbead (MCMB), soft carbon, hard carbon, and amorphous carbon.

According to some embodiments of the present application, the shape of the carbon material includes, but is not limited to, being fibrous, spherical, granular, and scaly.

According to some embodiments of the present application, the carbon material has at least one of the following characteristics:

(a) a specific surface area (BET) of less than 5 $m^2/g$;

(b) a median particle size (D50) of 5 μm to 30 μm; or

(c) amorphous carbon on a surface.

Specific surface area (BET)

In some embodiments, the carbon material has a specific surface area of less than 5 $m^2/g$. In some embodiments, the carbon material has a specific surface area of less than 3 $m^2/g$. In some embodiments, the carbon material has a specific surface area of less than 1 $m^2/g$. In some embodiments, the carbon material has a specific surface area of greater than 0.1 $m^2/g$. In some embodiments, the carbon material has a specific surface area of less than 0.7 $m^2/g$. In some embodiments, the carbon material has a specific surface area of less than 0.5 $m^2/g$. In some embodiments, the specific surface area of the carbon material is in a range defined by any two of the above values. When the specific surface area of the carbon material falls within the above ranges, precipitation of lithium on the electrode surface can be suppressed, and the generation of gases due to the reaction of the anode with the electrolyte can also be suppressed.

The specific surface area (BET) of the carbon material may be measured by using the following method: measuring the specific surface area by using a surface area meter (fully automatic surface area measuring instrument manufactured by Okura Riken), where the test sample is preliminarily dried at 350°C for 15 minutes while circulating nitrogen, and the specific surface area is then measured by a nitrogen adsorption BET single-point method utilizing a gas flow method using a nitrogen-helium mixed gas of which the relative pressure of nitrogen with respect to the atmospheric pressure is accurately adjusted to 0.3.

Median particle size (D50)

The median particle size (D50) of the carbon material is a volume-based average particle size obtained using a laser diffraction/scattering method. In some embodiments, the carbon material has a median particle size (D50) of 5

μm to 30 μm. In some embodiments, the carbon material has a median particle size (D50) of 10 μm to 25 μm. In some embodiments, the carbon material has a median particle size (D50) of 15 μm to 20 μm. In some embodiments, the carbon material has a median particle size (D50) of 1 μm, 3 μm, 5 μm, 7 μm, 10 μm, 15 μm, 20 μm, 25 μm, or 30 μm or in a range defined by any two of these values. When the median particle size of the carbon material falls within the above ranges, the irreversible capacity of the electrochemical device is low, and the anode can be easily evenly coated.

The median particle size (D50) of the carbon material may be measured by using the following method: dispersing the carbon material in a 0.2 wt% aqueous solution (10 mL) of poly(oxyethylene(20)) sorbitan monolaurate, and testing with a laser diffraction/scattering particle size distribution analyzer (LA-700 manufactured by Horiba, Ltd).

X-ray diffraction pattern parameters:

According to some embodiments of the present application, based on X-ray diffraction patterns obtained using the Gakushin method, the interlayer spacing of the lattice plane (002 plane) of the carbon material is in the range of 0.335 nm to 0.360 nm, in the range of 0.335 nm to 0.350 nm or in the range of 0.335 nm to 0.345 nm.

According to some embodiments of the present application, based on X-ray diffraction patterns obtained using the Gakushin method, the crystallite size (Lc) of the carbon material is greater than 1.0 nm or greater than 1.5 nm.

Raman spectrum parameters

In some embodiments, the Raman R value of the carbon material is greater than 0.01, greater than 0.03 or greater than 0.1. In some embodiments, the Raman R value of the carbon material is less than 1.5, less than 1.2, less than 1.0 or less than 0.5. In some embodiments, the Raman R value of the carbon material is in a range defined by any two of the above values.

The full-width-at-half maximum of the Raman peak at around 1580 $cm^{-1}$ of the carbon material is not particularly limited. In some embodiments, the full-width-at-half maximum of the Raman peak at around 1580 $cm^{-1}$ of the carbon material is greater than 10 $cm^{-1}$ or greater than 15 $cm^{-1}$. In some embodiments, the full-width-at-half maximum of the Raman peak at around 1580 $cm^{-1}$ of the carbon material is less than 100 $cm^{-1}$, less than 80 $cm^{-1}$, less than 60 $cm^{-1}$ or less than 40 $cm^{-1}$. In some embodiments, the full-width-at-half maximum of the Raman peak at around 1580 $cm^{-1}$ of the carbon material is in a range defined by any two of the above values.

The Raman R value and the full-width-at-half maximum of the Raman peak are indicators of the crystallinity of the surface of the carbon material. With suitable crystallinity, interlayer sites accommodating lithium in the carbon material during charging and discharging can be maintained and will not disappear, thereby improving the chemical stability of the carbon material.

When the Raman R value and/or the full-width-at-half maximum of the Raman peak falls within the above ranges, the carbon material can form an appropriate covering on the surface of the anode, thereby improving the storage characteristics, cycle characteristics, load characteristics and the like of the electrochemical device, and suppressing the reduction in efficiency and formation of gases due to the reaction of the carbon material with the electrolyte.

The Raman R value or the full-width-at-half maximum of the Raman peak may be measured using argon-ion laser Raman spectroscopy: using a Raman spectroscope (manufactured by JASCO Corporation), where the test sample is caused to naturally fall and fill the measuring cell, the surface of the test sample in the cell is irradiated with an argon ion laser, and the cell is rotated in a plane perpendicular to the laser, thus implementing the measurement. For the Raman spectrum obtained, an intensity IA of the peak PA at around 1580 $cm^{-1}$ and an intensity IB of the peak PB at around 1360 $cm^{-1}$ are measured, and an intensity ratio R is calculated (R=IB/IA).

Measurement conditions of the above Raman spectroscopy are as follows:

- Wavelength of argon ion laser: 514.5 nm
- Laser power on the test sample: 15-25 mW
- Resolution: 10-20 $cm^{-1}$
- Measurement range: 1100 $cm^{-1}$-1730 $cm^{-1}$
- Analysis of Raman R value and full-width-at-half maximum of the Raman peak: background processing
- Smoothing: simple average, 5-point convolution

Circularity

The definition of "circularity" is as follows: circularity = (perimeter of an equivalent circle having the same area as that of the projected particle shape)/(actual perimeter of the projected particle shape). Circularity being 1.0 indicates a theoretically perfect sphere.

In some embodiments, the particle size of the carbon material is 3 μm to 40 μm, and the circularity is greater than 0.1, greater than 0.5, greater than 0.8, greater than 0.85, greater than 0.9 or greater than 1.0.

For high-current-density charging and discharging characteristics, the larger the circularity of the carbon material is, the higher the filling performance is, which helps suppress resistance between particles, thereby improving the charging and discharging characteristics of the electrochemical device at high current density.

The circularity of the carbon material may be measured using a flow type particle image analyzer (FPIA manufactured by Sysmex Corporation): dispersing 0.2 g of a test sample in a 0.2 wt% aqueous solution (50 mL) of poly(oxyethylene(20)) sorbitan monolaurate, propagating an ultrasonic wave of 28 kHz to the dispersion for 1 minute at an output of 60 W, and then examining particles having a particle size in the range of 3 μm to 40 μm with the analyzer having a detection range set at 0.6 μm to 400 μm.

The method for increasing circularity is not particularly limited. Spherification may be adopted to make the shapes of the gaps between the carbon material particles uniform during the preparation of the electrodes. Spherification may be performed by mechanical means such as applying a shearing force or compressive force, or by mechanical/physical means such as granulation of multiple particles by applying a binder or by the adhesion of particles, so as to make the carbon material particles nearly perfectly spherical.

Tap density

In some embodiments, the tap density of the carbon material is greater than 0.1 g/cm$^3$, greater than 0.5 g/cm$^3$, greater than 0.7 g/cm$^3$, or greater than 1 g/cm$^3$. In some embodiments, the tap density of the carbon material is less than 2 g/cm$^3$, less than 1.8 g/cm$^3$, or less than 1.6 g/cm$^3$. In some embodiments, the tap density of the carbon material is in a range defined by any two of the above values. When the tap density of the carbon material falls within the above ranges, the capacity of the electrochemical device can be ensured, and the increase in resistance between carbon material particles can be suppressed.

The tap density of the carbon material may be tested using the following method: sieving the test sample through a mesh with a 300 μm mesh size to fall into a 20 cm$^3$ tapping tank until the tapping tank is filled up with the test sample to its top surface, causing a powder density tester (e.g., tap denser manufactured by Seishin Enterprise Co., Ltd.) to shake for 1000 times with a stroke length of 10 mm, and calculating the tap density according to the current mass and the mass of the test sample.

Orientation ratio

In some embodiments, the orientation ratio of the carbon material is greater than 0.005, greater than 0.01 or greater than 0.015. In some embodiments, the orientation ratio of the carbon material is less than 0.67. In some embodiments, the orientation ratio of the carbon material is in a range defined by any two of the above values. When the orientation ratio of the carbon material falls within the above ranges, the electrochemical device has excellent high-density charging and discharging characteristics.

The orientation ratio of the carbon material may be measured by X-ray diffraction after the test sample is press-molded: 0.47 g of the test sample is introduced into a molding machine having a diameter of 17 mm, and compressed at 58.8 MN·m$^{-2}$ to obtain a molded body. The molded body is fixed with clay so that the molded body and the surface of the sample holder for measurement are the same surface, and X-ray diffraction measurement is performed. The ratio represented by (110) diffraction peak intensity / (004) diffraction peak intensity is calculated according to the obtained peak intensities of (110) diffraction and (004) diffraction of the carbon.

Measurement conditions of the X-ray diffraction test are as follows:

- Target: Cu (Kα ray) graphite monochromator
- Slit: divergent slit = 0.5 degrees; light-receiving slit = 0.15 mm;<br>scattering slit = 0.5 degrees
- The measurement range and step angle/measurement time ("2θ" represents the diffraction angle):

    (110) plane: 75 degrees≤2θ≤80 degrees 1 degree/60 seconds

(004) plane: 52 degrees≤2θ≤57 degrees 1 degree/60 seconds

Aspect ratio

In some embodiments, the aspect ratio of the carbon material is greater than 1, greater than 2 or greater than 3. In some embodiments, the aspect ratio of the carbon material is less than 10, less than 8 or less than 5. In some embodiments, the aspect ratio of the carbon material is in a range defined by any two of the above values.

When the aspect ratio of the carbon material falls within the above ranges, a more even coating can be achieved, so the electrochemical device has excellent high-current-density charging and discharging characteristics.

(4) Porosity

According to some embodiments of the present application, the porosity of the anode mixture layer is 10% to 60%. In some embodiments, the porosity of the anode mixture layer is 15% to 50%. In some embodiments, the porosity of the anode mixture layer is 20% to 40%. In some embodiments, the porosity of the anode mixture layer is 25% to 30%. In some embodiments, the porosity of the anode mixture layer is 10%, 15%, 20%, 25%, 30%, 35%, 40%, 45%, 50%, 55%, or 60% or in a range defined by any two of these values.

The porosity of the anode mixture layer may be measured using the following method: using a true density tester AccuPyc II 1340 for testing, where each sample is measured at least three times, at least three pieces of data are selected, and an average value is calculated. The porosity of the anode mixture layer is calculated based on the following equation: porosity=(V1-V2)/V1×100%, where VI represents the apparent volume, V1=sample surface area×sample thickness×sample quantity, and V2 represents the true volume.

(5) Thickness

The thickness of the anode mixture layer is a thickness of the anode mixture layer on any one side of the anode current collector. In some embodiments, the thickness of the anode mixture layer is not greater than 200 μm. In some embodiments, the thickness of the anode mixture layer is not greater than 150 μm. In some embodiments, the thickness of the anode mixture layer is not greater than 100 μm. In some embodiments, the thickness of the anode mixture layer is not greater than 50 μm. In some embodiments, the thickness of the anode mixture layer is not less than 15 μm. In some embodiments, the thickness of the anode mixture layer is not less than 20 μm. In some embodiments, the thickness of the anode mixture layer is not less than 30 μm. In some embodiments, the thickness of the anode mixture layer is in a range defined by any two of the above values.

(6) Ball impact test for anode mixture layer

According to some embodiments of the present application, a minimum height from which a ball having a diameter of 15 mm and a weight of 12 g falls onto the anode mixture layer to cause formation of cracks on the anode mixture layer is 50 cm or above. In some embodiments, a minimum height from which a ball having a diameter of 15 mm and a weight of 12 g falls onto the anode mixture layer to cause formation of cracks on the anode mixture layer is 150 cm or below.

The minimum height for the ball to cause formation of cracks on the anode mixture layer is related to the interface of the mixture layer. When the minimum height is 50 cm or above, no cracks are formed in an undesired direction during the cutting of the interface of the anode mixture layer.

Provided that a balance is achieved between the machine direction (MD) and transverse direction (TD), the minimum height for the ball to cause formation of cracks on the anode mixture layer is related to the thickness and porosity of the anode mixture layer. The larger the thickness of the anode mixture layer is, the larger the minimum height for the ball to cause the formation of cracks on the anode mixture layer will be, but an excessively thick anode mixture layer causes a decrease in the energy density of the electrochemical device. The lower the porosity of the anode mixture layer is, the larger the minimum height for the ball to cause the formation of cracks on the anode mixture layer will be, but an excessively low porosity degrades the electrochemical performance (e.g., rate performance) of the electrochemical device.

(7) Auxiliary agent

According to some embodiments of the present application, the anode mixture layer further includes an auxiliary agent.

According to some embodiments of the present application, the auxiliary agent has at least one of the following

characteristics:

(a) includes polyether siloxane;

(b) an oxidation potential of not less than 4.5 V and a reductive potential of not greater than 0.5 V; or

(c) a surface tension of an aqueous solution containing 0.1 wt% of the auxiliary agent being not greater than 30 mN/m.

Polyether siloxane

In some embodiments, the auxiliary agent includes polyether siloxane. In some embodiments, the auxiliary agent has Si-C and Si-O bonds. In some embodiments, the polyether siloxane includes at least one of a composite silicone polyether complex, a polyether modified trisiloxane, or a polyether modified silicone polyether siloxane.

Examples of polyether siloxane include, but are not limited to, trisiloxane surfactant (CAS No.3390-61-2; 28855-11-0), silicone surfactant (Sylgard 309), hydroxy-terminated polydimethylsiloxane (PMX-0156) or dimethicone (CAS No.63148-62-9).

The polyether siloxane may be used alone or in any combination. When the auxiliary agent includes two or more polyether siloxanes, the content of the polyether siloxane means the total content of the two or more polyether siloxanes. In some embodiments, based on the total weight of the anode mixture layer, the content of the polyether siloxane is 3000 ppm or below, 2000 ppm or below, 1000 ppm or below, 500 ppm or below, 300 ppm or below, or 200 ppm or below. When the content of the polyether siloxane falls within the above ranges, performance such as output power characteristics, load characteristics, low-temperature characteristics, cycle characteristics and high-temperature storage characteristics of the electrochemical device can be improved.

Oxidation/reductive potential

In some embodiments, the auxiliary agent has an oxidation potential of not less than 4.5 V and a reductive potential of not greater than 0.5 V. In some embodiments, the auxiliary agent has an oxidation potential of not less than 5 V and a reductive potential of not greater than 0.3 V. With the above oxidation/reductive potential, the auxiliary agent has stable performance, which helps improve the cycle performance and high-temperature storage performance of the electrochemical device.

Surface tension

In some embodiments, the surface tension of an aqueous solution containing 0.1 wt% of the auxiliary agent is not greater than 30 mN/m. In some embodiments, the surface tension of an aqueous solution containing 0.1 wt% of the auxiliary agent is not greater than 25 mN/m. In some embodiments, the surface tension of an aqueous solution containing 0.1 wt% of the auxiliary agent is not greater than 20 mN/m. In some embodiments, the surface tension of an aqueous solution containing 0.1 wt% of the auxiliary agent is not greater than 15 mN/m. In some embodiments, the surface tension of an aqueous solution containing 0.1 wt% of the auxiliary agent is not greater than 10 mN/m. With the above surface tension, the auxiliary agent provides the anode mixture layer with a good interface, which helps improve the cycle performance and high-temperature storage performance of the electrochemical device.

The surface tension of the auxiliary agent can be measured by using the following method: testing an aqueous solution, which has a solid content of 1%, of the auxiliary agent by using a JC2000D3E contact angle goniometer, where each sample is tested at least three times, at least three pieces of data are selected, and an average value is calculated, thus obtaining the surface tension of the auxiliary agent.

(8) Other components

Trace elements

According to some embodiments of the present application, the anode mixture layer further includes at least one metal selected from molybdenum, iron, and copper. These metal elements can react with some organic substances with poor electrical conductivity in the anode active material, thereby facilitating the formation of a film on the surface of the anode active material.

According to some embodiments of the present application, the above metal elements are present in the anode mixture layer in trace amounts. Excess metal elements are likely to form electrically nonconductive byproducts attaching to the surface of the anode. In some embodiments, the content of the at least one metal is not greater than 0.05 wt%

based on the total weight of the anode mixture layer. In some embodiments, the content of the at least one metal is not greater than 0.03 wt%. In some embodiments, the content of the at least one metal is not greater than 0.01 wt%.

Silicon-containing and/or tin-containing material

According to some embodiments of the present application, the anode mixture layer further includes at least one of a silicon-containing material, a tin-containing material, or an alloy material. According to some embodiments of the present application, the anode mixture layer further includes at least one of a silicon-containing material or a tin-containing material. In some embodiments, the anode mixture layer further includes one or more of a silicon-containing material, a silicon-carbon composite material, a silicon-oxygen material, an alloy material and a lithium-containing metal composite oxide material. In some embodiments, the anode mixture layer further includes other types of anode active materials, for example, one or more materials containing metal elements and metalloid elements capable of forming an alloy with lithium. In some embodiments, examples of the metal elements and metalloid elements include, but are not limited to, Mg, B, Al, Ga, In, Si, Ge, Sn, Pb, Bi, Cd, Ag, Zn, Hf, Zr, Y, Pd and Pt. In some embodiments, examples of the metal elements and metalloid elements include Si, Sn or a combination thereof. Si and Sn have excellent capacity to deintercalate lithium ions, and can provide a high energy density for lithium-ion batteries. In some embodiments, the other types of anode active materials may further include one or more of a metal oxide and a polymer compound. In some embodiments, the metal oxide includes, but is not limited to, iron oxide, ruthenium oxide and molybdenum oxide. In some embodiments, the polymer compound includes, but is not limited to, polyacetylene, polyaniline and polypyrrole.

Anode conductive material

In some embodiments, the anode mixture layer further includes an anode conductive material, and the conductive material may include any conductive material as long as it does not cause a chemical change. Nonlimiting examples of the conductive material include a carbon-based material (e.g., natural graphite, artificial graphite, carbon black, acetylene black, ketjen black, and carbon fiber), a conductive polymer (e.g., a polyphenylene derivative) and a mixture thereof.

Anode binder

In some embodiments, the anode mixture layer further includes an anode binder. The anode binder increases the binding of the anode active material particles to each other and the binding of the anode active material to the current collector. The type of the anode binder is not particularly limited and the anode binder may be any material that is stable in the electrolyte or the solvent used in the preparation of electrodes.

Examples of the anode binder include, but are not limited to, resin-based polymers such as polyethylene, polypropylene, polyethylene terephthalate, polymethyl methacrylate, aromatic polyamide, polyimide, cellulose, nitrocellulose or the like; rubber-like polymers such as SBR (styrene-butadiene rubber), isoprene rubber, butadiene rubber, fluororubber, NBR (acrylonitrile-butadiene rubber), ethylene-propylene rubber or the like; styrene-butadiene-styrene block copolymers or hydrogenated products thereof; thermoplastic elastomeric polymers such as EPDM (ethylene-propylene-diene terpolymer), styrene-ethylene-butadiene-styrene copolymers, styrene-isoprene-styrene block copolymers, or hydrogenated products thereof; soft resin-like polymers such as syndiotactic-1,2-polybutadiene, polyvinyl acetate, ethylene-vinyl acetate copolymers, propylene-$\alpha$-olefin copolymers and the like; fluoropolymers such as polyvinylidene fluoride, polytetrafluoroethylene, fluorinated polyvinylidene fluoride, polytetrafluoroethylene-ethylene copolymers and the like; and polymer compositions having ionic conductivity towards alkali metal ions (e.g., lithium ions). The anode binder may be used alone or in any combination.

In some embodiments, the content of the anode binder is greater than 0.1 wt%, greater than 0.5 wt%, or greater than 0.6 wt% based on the total weight of the anode mixture layer. In some embodiments, the content of the anode binder is less than 20 wt%, less than 15 wt%, less than 10 wt%, or less than 8 wt% based on the total weight of the anode mixture layer. In some embodiments, the content of the anode binder is in a range defined by any two of the above values. When the content of the anode binder falls within the above ranges, the capacity of the electrochemical device and the strength of the anode can be fully ensured.

In the case that the anode mixture layer includes a rubber-like polymer (e.g., SBR), in some embodiments, the content of the anode binder is greater than 0.1 wt%, greater than 0.5 wt%, or greater than 0.6 wt% based on the total weight of the anode mixture layer. In some embodiments, the content of the anode binder is less than 5 wt%, less than 3 wt%, or less than 2 wt% based on the total weight of the anode mixture layer. In some embodiments, the content of the anode binder is in a range defined by any two of the above values based on the total weight of the anode mixture layer.

In the case that the anode mixture layer includes a fluoropolymer (e.g., polyvinylidene fluoride), in some embodiments, the content of the anode binder is greater than 1 wt%, greater than 2 wt%, or greater than 3 wt% based on

the total weight of the anode mixture layer. In some embodiments, the content of the anode binder is less than 15 wt%, less than 10 wt%, or less than 8 wt% based on the total weight of the anode mixture layer. The content of the anode binder is in a range defined by any two of the above values based on the total weight of the anode mixture layer.

Solvent

The type of the solvent for forming the anode slurry is not particularly limited and may be any solvent capable of dissolving or dispersing the anode active material, the anode binder, as well as a thickener and conductive material that are used if needed. In some embodiments, the solvent for forming the anode slurry may be any one of an aqueous solvent or an organic solvent. Examples of the aqueous solvent may include, but are not limited to, water, alcohol, and the like. Examples of the organic solvent may include, but are not limited to, N-methylpyrrolidone (NMP), dimethylformamide, dimethyl acetamide, methyl ethyl ketone, cyclohexanone, methyl acetate, methacrylate, diethyl triamine, N,N-dimethylaminopropyl amine, tetrahydrofuran (THF), toluene, acetone, diethyl ether, hexamethylphosphoric amide, dimethyl sulfoxide, benzene, xylene, quinoline, pyridine, methyl naphthalene, hexane and the like. The solvent may be used alone or in any combination.

Thickener

The thickener is generally used for adjusting the viscosity of the anode slurry. The type of the thickener is not particularly limited, and examples of the thickener may include, but are not limited to, carboxymethyl cellulose, methyl cellulose, hydroxymethyl cellulose, ethyl cellulose, polyvinyl alcohol, oxidized starch, phosphorylated starch, casein and salts thereof. The thickener may be used alone or in any combination.

In some embodiments, the content of the thickener is greater than 0.1 wt%, greater than 0.5 wt%, or greater than 0.6 wt% based on the total weight of the anode mixture layer. In some embodiments, the content of the thickener is less than 5 wt%, less than 3 wt%, or less than 2 wt% based on the total weight of the anode mixture layer. When the content of the thickener falls within the above ranges, the decrease in capacity and increase in resistance of the electrochemical device can be suppressed, and good coatability of the anode slurry can be ensured.

(9) Surface coating

In some embodiments, the surface of the anode mixture layer may be attached with a substance having a different composition. Examples of the substance attached to the surface of the anode mixture layer include, but are not limited to, alumina, silica, titania, zirconia, magnesia, calcium oxide, boron oxide, antimony oxide, bismuth oxide and other oxides, lithium sulfate, sodium sulfate, potassium sulfate, magnesium sulfate, calcium sulfate, aluminum sulfate and other sulfates, lithium carbonate, calcium carbonate, magnesium carbonate and other carbonates.

(10) Content of anode active material

In some embodiments, the content of the anode active material is greater than 80 wt%, greater than 82 wt%, or greater than 84 wt% based on the total weight of the anode mixture layer. In some embodiments, the content of the anode active material is less than 99 wt% or less than 98 wt% based on the total weight of the anode mixture layer. In some embodiments, the content of the anode active material is in a range defined by any two of the above values based on the total weight of the anode mixture layer.

(11) Density of anode active material

In some embodiments, the density of the anode active material in the anode mixture layer is greater than 1 $g/cm^3$, greater than 1.2 $g/cm^3$, or greater than 1.3 $g/cm^3$. In some embodiments, the density of the anode active material in the anode mixture layer is less than 2.2 $g/cm^3$, less than 2.1 $g/cm^3$, less than 2.0 $g/cm^3$, or less than 1.9 $g/cm^3$. In some embodiments, the density of the anode active material in the anode mixture layer is in a range defined by any two of the above values.

When the density of the anode active material falls within the above ranges, breakage of the anode active material particles can be prevented, the degradation of the high-current-density charging and discharging characteristics caused by the increase in initial irreversible capacity of the electrochemical device or caused by reduced permeation of the electrolyte near the anode current collector/anode active material interface can be suppressed, and the decrease in capacity and increase in resistance of the electrochemical device can be suppressed.

2. Anode current collector

Any well-known current collector may be used as the current collector for maintaining the anode active material. Examples of the anode current collector include, but are not limited to, metal materials such as aluminum, copper, nickel, stainless steel, and nickel plated steel. In some embodiments, the anode current collector is copper.

In the case that the anode current collector is a metal material, the form of the anode current collector may include, but is not limited to, metal foil, metal cylinder, metal reel, metal plate, metal film, metal mesh, stamped metal, foamed metal, and the like. In some embodiments, the anode current collector is a metal film. In some embodiments, the anode current collector is a copper foil. In some embodiments, the anode current collector is a rolled copper foil based on a rolling method or an electrolytic copper foil based on an electrolytic method.

In some embodiments, the thickness of the anode current collector is greater than 1 μm or greater than 5 μm. In some embodiments, the thickness of the anode current collector is less than 100 μm or less than 50 μm. In some embodiments, the thickness of the anode current collector is in a range defined by any two of the above values.

A thickness ratio between the anode current collector and the anode mixture layer is the ratio of the thickness of the anode mixture layer of the single side before the injection of the electrolyte to the thickness of the anode current collector, and its value is not particularly limited. In some embodiments, the thickness ratio between the anode current collector and the anode mixture layer is less than 150, less than 20, or less than 10. In some embodiments, the thickness ratio between the anode current collector and the anode mixture layer is greater than 0.1, greater than 0.4, or greater than 1. In some embodiments, the thickness ratio between the anode current collector and the anode mixture layer is in a range defined by any two of the above values. When the thickness ratio between the anode current collector and the anode mixture layer falls within the above ranges, the capacity of the electrochemical device can be ensured, and heat generation in the anode current collector during high-current-density charging and discharging can be suppressed.

II. Electrolyte

The electrolyte used in the electrochemical device of the present application includes an electrolyte and a solvent that dissolves the electrolyte. In some embodiments, the electrolyte used in the electrochemical device of the present application further includes an additive.

One of the main features of the electrochemical device of the present application lies in that the electrolyte includes a phosphorus- and oxygen-containing compound.

According to some embodiments of the present application, the content of the phosphorus- and oxygen-containing compound is 0.001 wt% to 10 wt% based on the total weight of the electrolyte. In some embodiments, the content of the phosphorus- and oxygen-containing compound is 0.005 wt% to 8 wt% based on the total weight of the electrolyte. In some embodiments, the content of the phosphorus- and oxygen-containing compound is 0.01 wt% to 5 wt% based on the total weight of the electrolyte. In some embodiments, the content of the phosphorus- and oxygen-containing compound is 0.05 wt% to 3 wt% based on the total weight of the electrolyte. In some embodiments, the content of the phosphorus- and oxygen-containing compound is 0.1 wt% to 2 wt% based on the total weight of the electrolyte. In some embodiments, the content of the phosphorus- and oxygen-containing compound is 0.5 wt% to 1 wt% based on the total weight of the electrolyte.

According to some embodiments of the present application, the electrolyte includes at least one of the following compounds:

(a) lithium monofluorophosphate;

(b) lithium difluorophosphate;

(c) phosphate;

(d) phosphocyclic anhydride; or

(e) the compound of Formula 1:

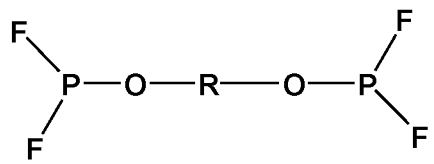

Formula 1

wherein R is substituted or unsubstituted $C_1$-$C_{10}$ hydrocarbyl, wherein when substituted, the substituent is halo.

(a) Lithium monofluorophosphate

In some embodiments, the content of lithium monofluorophosphate is 0.001 wt% to 10 wt% based on the total weight of the electrolyte. In some embodiments, the content of lithium monofluorophosphate is 0.005 wt% to 8 wt% based on the total weight of the electrolyte. In some embodiments, the content of lithium monofluorophosphate is 0.01 wt% to 5 wt% based on the total weight of the electrolyte. In some embodiments, the content of lithium monofluorophosphate is 0.05 wt% to 3 wt% based on the total weight of the electrolyte. In some embodiments, the content of lithium monofluorophosphate is 0.1 wt% to 2 wt% based on the total weight of the electrolyte. In some embodiments, the content of lithium monofluorophosphate is 0.5 wt% to 1 wt% based on the total weight of the electrolyte.

(b) Lithium difluorophosphate

In some embodiments, the content of lithium difluorophosphate is 0.001 to 10 wt% based on the total weight of the electrolyte. In some embodiments, the content of lithium difluorophosphate is 0.005 to 8 wt% based on the total weight of the electrolyte. In some embodiments, the content of lithium difluorophosphate is 0.01 to 5 wt% based on the total weight of the electrolyte. In some embodiments, the content of lithium difluorophosphate is 0.05 to 3 wt% based on the total weight of the electrolyte. In some embodiments, the content of lithium difluorophosphate is 0.1 to 2 wt% based on the total weight of the electrolyte. In some embodiments, the content of lithium difluorophosphate is 0.5 to 1 wt% based on the total weight of the electrolyte.

(c) Phosphate

According to the embodiments of the present application, the phosphate has the structure of Formula 2:

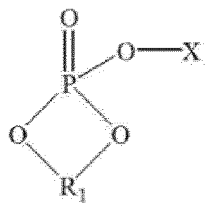

Formula 2

wherein X is a linear or non-linear alkyl group having 1 to 5 carbon atoms or $-SiR_2R_3R_4$, wherein $R_2$, $R_3$, and $R_4$ are each an alkyl group having 1 to 5 carbon atoms, and

$R_1$ is an alkylene group having 2 to 3 carbon atoms and substituted with a substituent selected from the following: at least one fluorine atom or an alkyl group containing at least one fluorine atom and having 1 to 3 carbon atoms.

According to some embodiments of the present application, in Formula 2, X is $-SiR_2R_3R_4$, and $R_1$ is an alkylene group having 2 carbon atoms and substituted with a substituent selected from the following: at least one fluorine atom or an alkyl group containing at least one fluorine atom and having 1 to 3 carbon atoms.

According to some embodiments of the present application, the compound of Formula 2 includes at least one of the compounds of Formulas 2a to 2h:

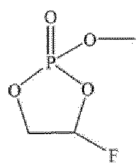 2a, 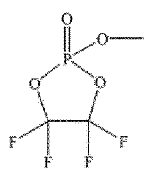 2b, 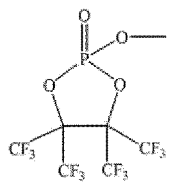 2c, 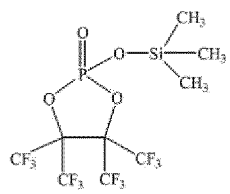 2d,

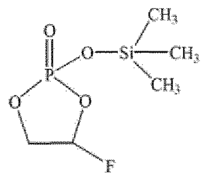 2e, 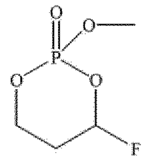 2f, 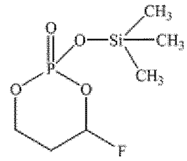 2g, 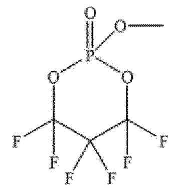 2h.

According to some embodiments of the present application, the content of the compound of Formula 2 is 0.001 wt% to 10 wt% based on the total weight of the electrolyte. In some embodiments, the content of the compound of Formula 2 is 0.005 wt% to 9 wt% based on the total weight of the electrolyte. In some embodiments, the content of the compound of Formula 2 is 0.01 wt% to 8 wt% based on the total weight of the electrolyte. In some embodiments, the content of the compound of Formula 2 is 0.05 wt% to 7 wt% based on the total weight of the electrolyte. In some embodiments, the content of the compound of Formula 2 is 0.1 wt% to 6 wt% based on the total weight of the electrolyte. In some embodiments, the content of the compound of Formula 2 is 0.5 wt% to 5 wt% based on the total weight of the electrolyte. In some embodiments, the content of the compound of Formula 2 is 1 wt% to 4 wt% based on the total weight of the electrolyte. In some embodiments, the content of the compound of Formula 2 is 2 wt% to 3 wt% based on the total weight of the electrolyte.

(d) Phosphocyclic anhydride

In some embodiments, the phosphocyclic anhydride includes one or more of compounds of Formula 3:

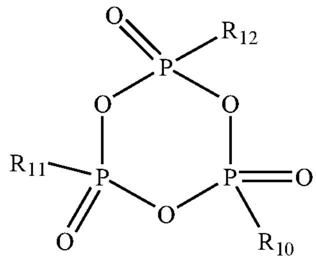 Formula 3

wherein $R_{10}$, $R_{11}$, and $R_{12}$ are each independently a hydrogen atom, $C_{1-20}$ alkyl (e.g., $C_{1-15}$ alkyl, $C_{1-10}$ alkyl, $C_{1-5}$ alkyl, $C_{5-20}$ alkyl, $C_{5-15}$ alkyl, and $C_{5-10}$ alkyl), $C_{6-50}$ aryl (e.g., $C_{6-30}$ aryl, $C_{6-26}$ aryl, $C_{6-20}$ aryl, $C_{10-50}$ aryl, $C_{10-30}$ aryl, $C_{10-26}$ aryl, or $C_{10-20}$ aryl), wherein $R_{10}$, $R_{11}$, and $R_{12}$ may be different from each other or the same as each other, or any two of them are the same.

In some embodiments, the phosphocyclic anhydride includes, but is not limited to, the following compounds:

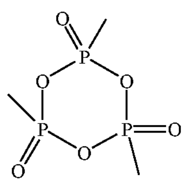 (TM3P), 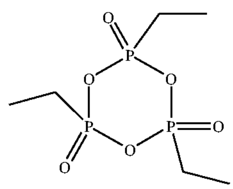 (TE3P), 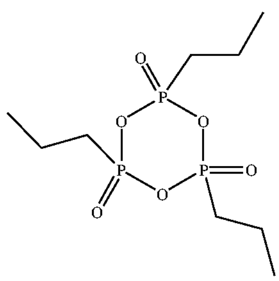 (T3P),

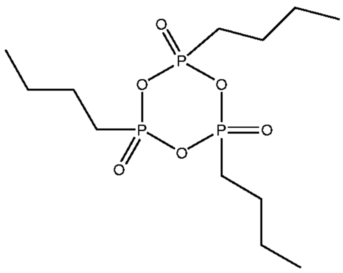,
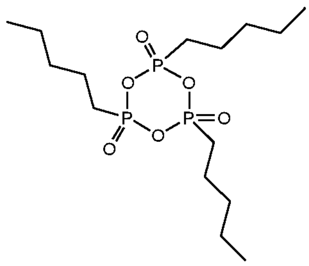,
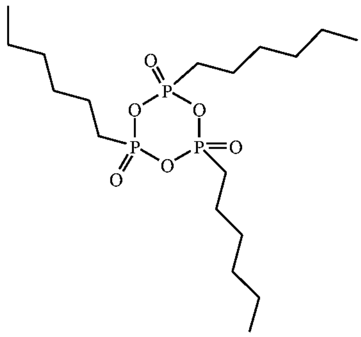,

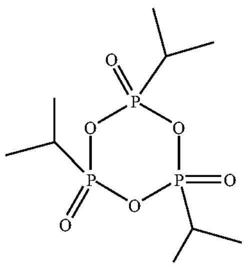,
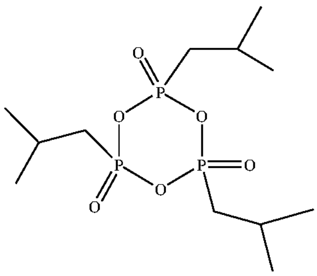,
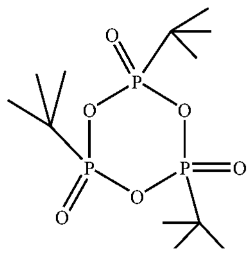,

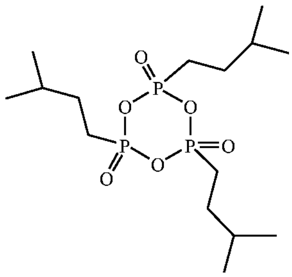,
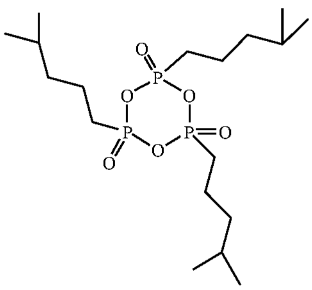,
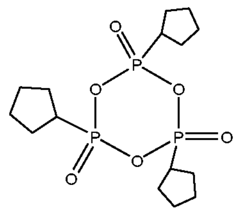,

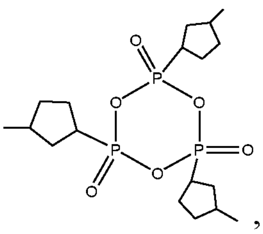,
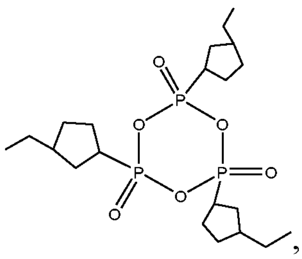,
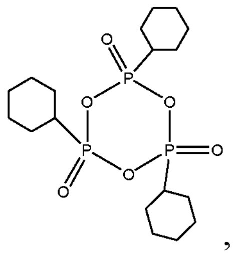,
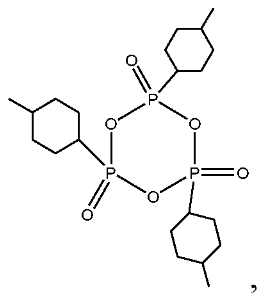,

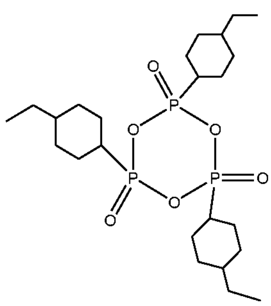,
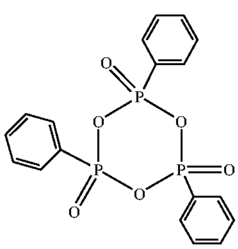,
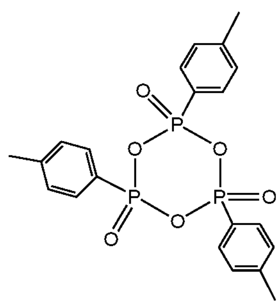,

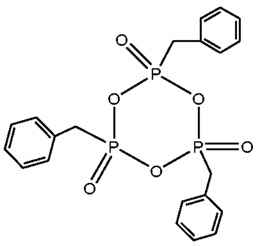,
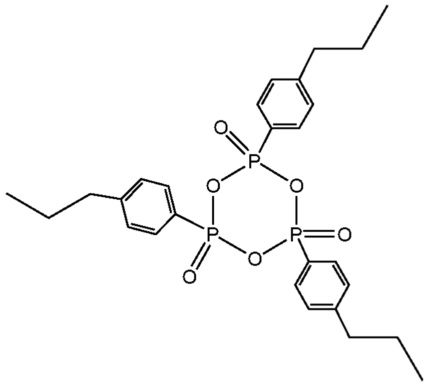,
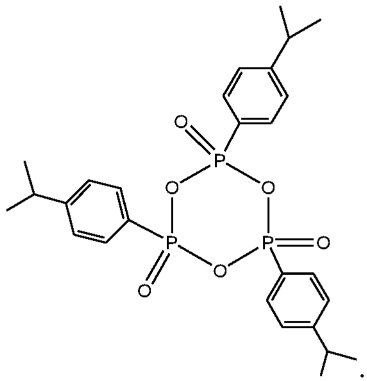.

In some embodiments, the content of the phosphocyclic anhydride is 0.01 wt% to 10 wt% based on the total weight of the electrolyte. In some embodiments, the content of the phosphocyclic anhydride is 0.05 wt% to 8 wt% based on the total weight of the electrolyte. In some embodiments, the content of the phosphocyclic anhydride is 0.1 wt% to 5 wt% based on the total weight of the electrolyte. In some embodiments, the content of the phosphocyclic anhydride is 0.5 wt% to 3 wt% based on the total weight of the electrolyte. In some embodiments, the content of the phosphocyclic anhydride is 1 wt% to 2 wt% based on the total weight of the electrolyte.

(e) Compound of Formula 1:

According to some embodiments of the present application, the compound of Formula 1 includes at least one of the following structural formulas:

Formula 1a: 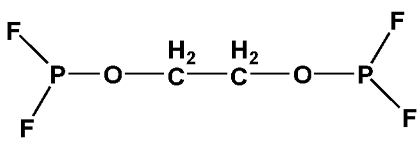 (1,2-bis(difluorophosphoryloxy)ethane);

Formula 1b: 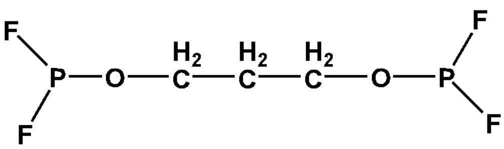 (1,2-bis(difluorophosphoryloxy)propane); or

Formula 1c: 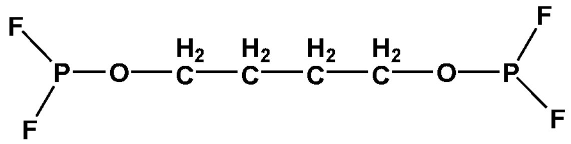 (1,2-bis(difluorophosphoryloxy)butane).

In some embodiments, the content of the compound of Formula 1 is 0.01 wt% to 15 wt% based on the total weight of the electrolyte. In some embodiments, the content of the compound of Formula 1 is 0.05 wt% to 12 wt% based on the total weight of the electrolyte. In some embodiments, the content of the compound of Formula 1 is 0.1 wt% to 10 wt% based on the total weight of the electrolyte. In some embodiments, the content of the compound of Formula 1 is 0.5 wt% to 8 wt% based on the total weight of the electrolyte. In some embodiments, the content of the compound of Formula 1 is 1 wt% to 5 wt% based on the total weight of the electrolyte. In some embodiments, the content of the compound of Formula 1 is 2 wt% to 4 wt% based on the total weight of the electrolyte.

Solvent

In some embodiments, the electrolyte further includes any non-aqueous solvent known in the prior art as a solvent of the electrolyte.

In some embodiments, the non-aqueous solvent includes, but is not limited to, one or more of the following: cyclic carbonate, chain carbonate, cyclic carboxylate, chain carboxylate, cyclic ether, chain ether, phosphorus-containing organic solvent, a sulfur-containing organic solvent and an aromatic fluorine-containing solvent.

In some embodiments, the cyclic carbonate includes, but is not limited to, one or more of the following: ethylene carbonate (EC), propylene carbonate (PC) and butylene carbonate. In some embodiments, the cyclic carbonate has 3-6 carbon atoms.

In some embodiments, examples of the cyclic carbonate may include, but are not limited to, one or more of the following: dimethyl carbonate, ethyl methyl carbonate, diethyl carbonate (DEC), methyl n-propyl carbonate, ethyl n-propyl carbonate, di-n-propyl carbonate or other chain carbonates. Examples of fluorine-substituted chain carbonates may include, but are not limited to, one or more of the following: bis(fluoromethyl)carbonate, bis(difluoromethyl)carbonate, bis(trifluoromethyl)carbonate, bis(2-fluoroethyl)carbonate, bis(2,2-difluoroethyl)carbonate, bis(2,2,2-trifluoroethyl)carbonate, 2-fluoroethyl methyl carbonate, 2,2-difluoroethyl methyl carbonate and 2,2,2-trifluoroethyl methyl carbonate.

In some embodiments, examples of the cyclic carboxylate may include, but are not limited to, one or more of γ-butyrolactone or γ-valerolactone. In some embodiments, a portion of hydrogen atoms of the cyclic carboxylate can be substituted with fluorine.

In some embodiments, examples of the chain carboxylate may include, but are not limited to, one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate and ethyl pivalate. In some embodiments, a portion of hydrogen atoms of the chain carboxylate can be substituted with fluorine. In some embodiments, examples of fluorine-substituted chain carboxylates may include, but are not limited to, methyl trifluoroacetate, ethyl trifluoroacetate, propyl trifluoroacetate, butyl trifluoroacetate and 2,2,2-trifluoroethyl trifluoroacetate.

In some embodiments, examples of the cyclic ether may include, but are not limited to, one or more of the following: tetrahydrofuran, 2-methyltetrahydrofuran, 1,3-dioxolane, 2-methyl-1,3-dioxolane, 4-methyl-1,3-dioxolane, 1,3-dioxane, 1,4-dioxane and dimethoxypropane.

In some embodiments, examples of the chain ether may include, but are not limited to, one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane and 1,2-ethoxymethoxyethane.

In some embodiments, examples of the phosphorus-containing organic solvent may include, but are not limited to, one or more of the following: trimethyl phosphate, triethyl phosphate, dimethyl ethyl phosphate, methyl diethyl phosphate, ethidene methyl phosphate, ethidene ethyl phosphate, triphenyl phosphate, trimethyl phosphite, triethyl phosphite, triphenyl phosphite, tris(2,2,2-trifluoroethyl) phosphate and tris(2,2,3,3,3-pentafluoropropyl) phosphate.

In some embodiments, examples of the sulfur-containing organic solvent may include, but are not limited to, one or more of the following: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methane sulfonate, methyl ethane sulfonate, ethyl ethanesulfonate, dimethyl sulfate, diethyl sulfate and dibutyl sulfate. In some embodiments, a portion of hydrogen atoms of the sulfur-containing organic solvent can be substituted with fluorine.

In some embodiments, the aromatic fluorine-containing solvent includes, but is not limited to, one or more of the following: fluorobenzene, difluorobenzene, trifluorobenzene, tetrafluorobenzene, pentafluorobenzene, hexafluorobenzene and trifluoromethylbenzene.

In some embodiments, the solvent used in the electrolyte of the present application includes cyclic carbonate, chain carbonate, cyclic carboxylate, chain carboxylate and combinations thereof. In some embodiments, the solvent used in the electrolyte of the present application includes an organic solvent selected from the group consisting of ethylene carbonate, propylene carbonate, diethyl carbonate, ethyl propionate, propyl propionate, n-propyl acetate, ethyl acetate and combinations thereof. In some embodiments, the solvent used in the electrolyte of the present application includes ethylene carbonate, propylene carbonate, diethyl carbonate, ethyl propionate, propyl propionate, γ-butyrolactone or a combination thereof.

After the chain carboxylate and/or the cyclic carboxylate are added to the electrolyte, the chain carboxylate and/or the cyclic carboxylate can form a passivation film on the surface of the electrode, thereby improving the capacity retention rate after the interval charging cycle of the electrochemical device. In some embodiments, the electrolyte contains 1 wt% to 60 wt% of chain carboxylate, cyclic carboxylate or combination thereof. In some embodiments, the electrolyte contains ethyl propionate, propyl propionate, γ-butyrolactone or a combination thereof, and based on the total weight of the electrolyte, the content of the combination is 1 wt% to 60 wt%, 10 wt% to 60 wt%, 10 wt% to 50 wt%, or 20 wt% to 50 wt%. In some embodiments, based on the total weight of the electrolyte, the electrolyte contains 1 wt% to 60 wt%, 10 wt% to 60 wt%, 20 wt% to 50 wt%, 20 wt% to 40 wt%, or 30 wt% of propyl propionate.

Additives

In some embodiments, examples of the additive may include, but are not limited to, one or more of the following: fluorocarbonate, carbon-carbon double bond-containing ethylene carbonate, a sulfur-oxygen double bond-containing compound, and acid anhydrides.

In some embodiments, the content of the additive is 0.01 wt% to 15 wt%, 0.1 wt% to 10 wt%, or 1 wt% to 5 wt% based on the total weight of the electrolyte.

According to the embodiments of the present application, the content of the propionate is 1.5 to 30 times, 1.5 to 20 times, 2 to 20 times, or 5 to 20 times that of the additive based on the total weight of the electrolyte.

In some embodiments, the additive includes one or more fluorocarbonates. When the lithium-ion battery is charged/discharged, the fluorocarbonate can act together with the propionate to form a stable protective film on the surface of the anode, thereby suppressing the decomposition reaction of the electrolyte.

In some embodiments, the fluorocarbonate has the formula $C=O(OR_1)(OR_2)$, where $R_1$ and $R_2$ are each selected from alkyl or haloalkyl having 1-6 carbon atoms, where at least one of $R_1$ and $R_2$ is selected from fluoroalkyl having 1-6 carbon atoms, and $R_1$ and $R_2$ optionally form a 5- to 7-membered ring along with the atoms to which they are connected.

In some embodiments, examples of the fluorocarbonate may include, but are not limited to, one or more of the following: fluoroethylene carbonate, cis 4,4-difluoroethylene carbonate, trans 4,4-difluoroethylene carbonate, 4,5-difluoroethylene carbonate, 4-fluoro-4-methylethylene carbonate, 4-fluoro-5-methylethylene carbonate, methyl trifluoromethyl carbonate, methyl trifluoroethyl carbonate and ethyl trifluoroethyl carbonate.

In some embodiments, the additive includes one or more carbon-carbon double bond-containing ethylene carbonates. Examples of the carbon-carbon double bond-containing ethylene carbonate may include, but are not limited to, one or more of the following: vinylene carbonate, methyl vinylene carbonate, ethyl vinylene carbonate, 1,2-dimethylvinylene carbonate, 1,2-diethylvinylene carbonate, fluorovinylene carbonate, trifluoromethyl vinylene carbonate, vinyl ethylene carbonate, 1-methyl-2-vinylethylene carbonate, 1-ethyl-2-vinylethylene carbonate, 1-n-propyl-2-vinylethylene carbonate, 1-methyl-2-vinylethylene carbonate, 1,1-divinylethylene carbonate, 1,2-divinylethylene carbonate, 1,1-dimethyl-2-methylene ethylene carbonate and 1,1-diethyl-2-methylene ethylene carbonate. In some embodiments, the carbon-carbon double bond-containing ethylene carbonate includes vinylene carbonate, which is readily available and can achieve a more excellent effect.

In some embodiments, the additive includes one or more sulfur-oxygen double bond-containing compounds. Examples of the sulfur-oxygen double bond-containing compound may include, but are not limited to, one or more of the following: cyclic sulfate, chain sulfate, chain sulfonate, cyclic sulfonate, chain sulfite and cyclic sulfite.

Examples of the cyclic sulfate may include, but are not limited to, one or more of the following: 1,2-ethanediol sulfate, 1,2-propanediol sulfate, 1,3-propanediol sulfate, 1,2-butanediol sulfate, 1,3-butanediol sulfate, 1,4-butanediol sulfate, 1,2-pentanediol sulfate, 1,3-pentanediol sulfate, 1,4-pentanediol sulfate and 1,5-pentanediol sulfate.

Examples of the chain sulfate may include, but are not limited to, one or more of the following: dimethyl sulfate, ethyl methyl sulfate and diethyl sulfate.

Examples of the chain sulfonate may include, but are not limited to, one or more of the following: fluorosulfonate such as methyl fluorosulfonate and ethyl fluorosulfonate, methyl methane sulfonate, ethyl methanesulfonate, butyl dimethanesulfonate, methyl 2-(methylsulfonyloxy)propionate and ethyl 2-(methylsulfonyloxy)propionate.

Examples of the cyclic sulfonate may include, but are not limited to, one or more of the following: 1,3-propane sultone, 1-fluoro-1,3-propane sultone, 2-fluoro-1,3-propane sultone, 3-fluoro-1,3-propane sultone, 1-methyl-1,3-propane sultone, 2-methyl-1,3-propane sultone, 3-methyl-1,3-propane sultone, 1-propene-1,3-sultone, 2-propene-1,3-sultone, 1-fluoro-1-propene-1,3-sulfonate, 2-fluoro-1-propene-1,3-sultone, 3-fluoro-1-propene-1,3-sultone, 1-fluoro-2-propene-1,3-sultone, 2-fluoro-2-propene-1,3-sultone, 3-fluoro-2-propene-1,3-sultone, 1-methyl-1-propene-1,3-sultone, 2-methyl-1-propene- 1,3-sultone, 3-methyl-1-propene- 1,3-sultone, 1-methyl-2-propene-1,3-sultone, 2-methyl-2-propene-1,3-sultone, 3-methyl-2-propene-1,3-sultone, 1,4-butane sultone, 1,5-pentane sultone, methylene methanedisulfonate and ethylene methanedisulfonate.

Examples of the chain sulfite may include, but are not limited to, one or more of the following: dimethyl sulfite, ethyl methyl sulfite and diethyl sulfite.

Examples of the cyclic sulfite may include, but are not limited to, one or more of the following: 1,2-ethanediol sulfite, 1,2-propanediol sulfite, 1,3-propanediol sulfite, 1,2-butanediol sulfite, 1,3-butanediol sulfite, 1,4-butanediol sulfite, 1,2-pentanediol sulfite, 1,3-pentanediol sulfite, 1,4-pentanediol sulfite and 1,5-pentanediol sulfite.

In some embodiments, the additive includes one or more acid anhydrides. Examples of the anhydride may include, but are not limited to, one or more of carboxylic acid anhydride, bi-sulfonic anhydride and carboxylic acid sulfonic anhydride. Examples of the carboxylic anhydride may include, but are not limited to, one or more of succinic anhydride, glutaric anhydride and maleic anhydride. Examples of the disulfonic anhydride may include, but are not limited to, one or more of ethane disulfonic anhydride and propane disulfonic anhydride. Examples of the carboxylic sulfonic anhydride may include, but are not limited to, one or more of sulfobenzoic anhydride, sulfopropionic anhydride and sulfobutyric anhydride.

In some embodiments, the additive is a combination of fluorocarbonate and carbon-carbon double bond-containing ethylene carbonate. In some embodiments, the additive is a combination of fluorocarbonate and a sulfur-oxygen double bond-containing compound. In some embodiments, the additive is a combination of fluorocarbonate and a compound having 2-4 cyano groups. In some embodiments, the additive is a combination of fluorocarbonate and cyclic carboxylate. In some embodiments, the additive is a combination of fluorocarbonate and cyclic phosphoric anhydride. In some embodiments, the additive is a combination of fluorocarbonate and carboxylic anhydride. In some embodiments, the additive is a combination of fluorocarbonate and sulfonic anhydride. In some embodiments, the additive is a combination of fluorocarbonate and carboxylic sulfonic anhydride.

Electrolyte

The electrolyte is not particularly limited and may be any substance that is well known as an electrolyte. In the case of a lithium secondary battery, a lithium salt is generally used. Examples of the electrolyte may include, but are not limited to, inorganic lithium salts such as $LiPF_6$, $LiBF_4$, $LiClO_4$, $LiAlF_4$, $LiSbF_6$, $LiTaF_6$, and $LiWF_7$; lithium tungstates such as $LiWOF_5$; lithium carboxylates such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonates such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonyl imide, lithium cyclic 1,3-perfluoropropane disulfonyl imide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium oxalatoborates such as lithium difluorooxalatoborate and lithium bis(oxalato)borate; lithium (malonato)borates such as lithium bis(malonato)borate and lithium difluoro(malonato)borate; lithium (malonato)phosphates such as lithium tris(malonato)phosphate, lithium difluorobis(malonato)phosphate, and lithium tetrafluoro(malonato)phosphate; fluorine-containing organic lithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$; lithium oxalatoborates such as lithium difluorooxalatoborate and lithium bis(oxalato)borate; and lithium oxalatophosphates such as lithium tetrafluorooxalatophosphate, lithium difluorobis(oxalato)phosphate, and lithium tris(oxalato)phosphate.

In some embodiments, the electrolyte is selected from $LiPF_6$, $LiSbF_6$, $LiTaF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonyl imide, lithium cyclic 1,3-perfluoropropane disulfonyl imide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, lithium difluorooxalatoborate, lithium bis(oxalato)borate, or lithium difluorobis(oxalato)phosphate, which helps to improve the output power characteristics, high-rate charging and discharging characteristics, high-temperature storage characteristics, and cycle characteristics of the electrochemical device.

The content of the electrolyte is not particularly limited, as long as the effect of the present application is not compromised. In some embodiments, the total molar concentration of lithium in the electrolyte is greater than 0.3 mol/L, greater than 0.4 mol/L, or greater than 0.5 mol/L. In some embodiments, the total molar concentration of lithium in the electrolyte is less than 3 mol/L, less than 2.5 mol/L, or less than 2.0 mol/L. In some embodiments, the total molar concentration of lithium in the electrolyte is in a range defined by any two of the above values. When the concentration

of the electrolyte falls within the above ranges, the quantity of charged lithium particles is not too small, and the viscosity is in an appropriate range, thereby ensuring good electrical conductivity.

In the case that two or more electrolytes are used, the electrolytes include at least one salt selected from the group consisting of borate, oxalate, and fluorosulfonate. In some embodiments, the electrolyte includes a salt selected from the group consisting of oxalate and fluorosulfonate. In some embodiments, the electrolyte may include a lithium salt. In some embodiments, the content of the salt selected from the group consisting of borate, oxalate, and fluorosulfonate is greater than 0.01 wt% or greater than 0.1 wt% based on the total weight of the electrolyte. In some embodiments, the content of the salt selected from the group consisting of borate, oxalate, and fluorosulfonate is less than 20 wt% or less than 10 wt% based on the total weight of the electrolyte. In some embodiments, the content of the salt selected from the group consisting of borate, oxalate, and fluorosulfonate is in a range defined by any two of the above values.

In some embodiments, the electrolyte includes one or more substances selected from the group consisting of borate, oxalate, and fluorosulfonate, and one or more other salts. The other salts may be lithium salts listed above, and in some embodiments, are $LiPF_6$, $LiN(FSO_2)(CF_3SO_2)$, $LiN(CF_3SO_2)_2$, $LiN(C_2F_5SO_2)_2$, lithium cyclic 1,2-perfluoroethane disulfonyl imide, lithium cyclic 1,3-perfluoropropane disulfonyl imide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, and $LiPF_3(C_2F_5)_3$. In some embodiments, the other salt is $LiPF_6$.

In some embodiments, the content of the other salts is greater than 0.01 wt% or greater than 0.1 wt% based on the total weight of the electrolyte. In some embodiments, the content of the other salts is less than 20 wt%, less than 15 wt%, or less than 10 wt% based on the total weight of the electrolyte. In some embodiments, the content of the other salts is in a range defined by any two of the above values. The above content of the other salts helps balance the electrical conductivity and viscosity of the electrolyte.

In addition to the above solvent, additive, and electrolyte salt, the electrolyte may contain additional additives such as an anode-film forming agent, a cathode protective agent, and an anti-overcharge agent if needed. The additives may be those commonly used in non-aqueous electrolyte secondary batteries, and examples of the additives may include, but are not limited to, vinylene carbonate, succinic anhydride, biphenyl, cyclohexylbenzene, 2,4-difluoroanisole, propane sultone, propene sultone, and the like. The additives may be used alone or in any combination. In addition, the content of the additives in the electrolyte is not particularly limited and may be properly set according to the type of the additive. In some embodiments, the content of the additive is less than 5 wt%, in the range of 0.01 wt% to 5 wt%, or in the range of 0.2 wt% to 5 wt% based on the total weight of the electrolyte.

## III. Cathode

The cathode includes a cathode current collector and a cathode mixture layer disposed on one or two surfaces of the cathode current collector.

### 1. Cathode mixture layer

The cathode mixture layer includes a cathode active material layer, and the cathode active material layer includes a cathode active material. The cathode active material layer may be one or more layers. Each of the cathode active material layers may include the same or different cathode active materials. The cathode active material is any substance capable of reversibly intercalating and deintercalating metal ions such as lithium ions.

The type of the cathode active material is not particularly limited, and may be any substance capable of electrochemically absorbing and releasing metal ions (e.g., lithium ions). In some embodiments, the cathode active material is a substance containing lithium and at least one transition metal. Examples of the cathode active material may include, but are not limited to, a lithium transition metal composite oxide and a lithium transition metal phosphate compound.

In some embodiments, the transition metal in the lithium transition metal composite oxide includes V, Ti, Cr, Mn, Fe, Co, Ni, Cu, and the like. In some embodiments, the lithium transition metal composite oxide includes: lithium cobalt composite oxides such as $LiCoO_2$; lithium nickel composite oxides such as $LiNiO_2$; lithium manganese composite oxides such as $LiMnO_2$, $LiMn_2O_4$, and $Li_2MnO_4$; lithium nickel manganese cobalt composite oxides such as $LiNi_{1/3}Mn_{1/3}CO_{1/3}O_2$ and $LiNi_{0.5}Mn_{0.3}Co_{0.2}O_2$, where some of the transition metal atoms as the body of the lithium transition metal composite oxides are substituted with Na, K, B, F, Al, Ti, V, Cr, Mn, Fe, Co, Li, Ni, Cu, Zn, Mg, Ga, Zr, Si, Nb, Mo, Sn, W and other elements. Examples of the lithium transition metal composite oxide may include, but are not limited to, $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.45}Co_{0.10}Al_{0.45}O_2$, $LiMn_{1.8}Al_{0.2}O_4$, $LiMn_{1.5}Ni_{0.5}O_4$, and the like. Examples of the lithium transition metal composite oxide include, but are not limited to, a combination of $LiCoO_2$ and $LiMn_2O_4$, where some of Mn in $LiMn_2O_4$ may be substituted with transition metals (e.g., $LiNi_{0.33}Co_{0.33}Mn_{0.33}O_2$), and some of Co in $LiCoO_2$ may be substituted with transition metals.

In some embodiments, the transition metal in the lithium transition metal phosphate compound includes V, Ti, Cr, Mn, Fe, Co, Ni, Cu, and the like. In some embodiments, the lithium transition metal phosphate compound includes: iron phosphates such as $LiFePO_4$, $Li_3Fe_2(PO_4)_3$, and $LiFeP_2O_7$; and cobalt phosphates such as $LiCoPO_4$, where some

of the transition metal atoms as the body of the lithium transition metal phosphate compounds are substituted with Al, Ti, V, Cr, Mn, Fe, Co, Li, Ni, Cu, Zn, Mg, Ga, Zr, Nb, Si and other elements.

In some embodiments, the cathode active material includes lithium phosphate, which can improve the continuous charging characteristics of the electrochemical device. The use of lithium phosphate is not limited herein. In some embodiments, the cathode active material and lithium phosphate are used in the mixture. In some embodiments, the content of lithium phosphate is greater than 0.1 wt%, greater than 0.3 wt%, or greater than 0.5 wt% based on the total weight of the cathode active material and lithium phosphate. In some embodiments, the content of lithium phosphate is less than 10 wt%, less than 8 wt%, or less than 5 wt% based on the total weight of the cathode active material and lithium phosphate. In some embodiments, the content of lithium phosphate is in a range defined by any two of the above values.

Surface coating

The surface of the cathode active material may be attached with a substance having a different composition. Examples of the substance attached to the surface may include, but are not limited to, alumina, silica, titania, zirconia, magnesia, calcium oxide, boron oxide, antimony oxide, bismuth oxide and other oxides, lithium sulfate, sodium sulfate, potassium sulfate, magnesium sulfate, calcium sulfate, aluminum sulfate and other sulfates, lithium carbonate, calcium carbonate, magnesium carbonate and other carbonates, and carbon.

The substances attached to the surface may be attached to the surface of the cathode active material by using the following methods: a method of dissolving or suspending the substance to be attached to the surface in a solvent, followed by infiltrating into the cathode active material and drying; a method of dissolving or suspending the substance to be attached to the surface in a solvent, followed by infiltrating into the cathode active material and repeated heating for reaction; a method of adding the substance to a precursor of the cathode active material followed by firing; and so on. In the case of carbon attachment, a method for mechanical attachment of a carbon material (e.g., activated carbon) may also be used.

In some embodiments, the content of the substance attached to the surface is greater than 0.1 ppm, greater than 1 ppm, or greater than 10 ppm based on the total weight of the cathode mixture layer. In some embodiments, the content of the substance attached to the surface is less than 20%, less than 10%, or less than 10% based on the total weight of the cathode mixture layer. In some embodiments, the content of the substance attached to the surface is in a range defined by any two of the above values based on the total weight of the cathode mixture layer.

The substance attached to the surface of the cathode active material can suppress the oxidation of the electrolyte on the surface of the cathode active material, thereby prolonging the service life of the electrochemical device. If the quantity of the substance attached to the surface is too small, the effect cannot be fully achieved; if the quantity of the substance attached to the surface is too large, entrance and exit of lithium ions are impeded, sometimes leading to an increase in resistance.

In the present application, the substance attached to the surface of the cathode active material and having a composition different from that of the cathode active material is also referred to as "cathode active material".

Shape

In some embodiments, the shape of the cathode active material particles include, but is not limited to, bulky, polyhedral, spherical, ellipsoidal, plate-shaped, needle-shaped, columnar, and the like. In some embodiments, the cathode active material particles include primary particles, secondary particles, or a combination thereof. In some embodiments, primary particles may agglomerate to form secondary particles.

Tap density

In some embodiments, the tap density of the cathode active material in the anode mixture layer is greater than 0.5 g/cm$^3$, greater than 0.8 g/cm$^3$, or greater than 1.0 g/cm$^3$. When the tap density of the cathode active material falls within the above ranges, the amount of dispersion medium required during the formation of the cathode mixture layer and the required amount of conductive material and cathode binder can be reduced, thereby enhancing the filling rate of the cathode active material and the capacity of the electrochemical device. A high-density cathode mixture layer may be formed by using composite oxide powder with high tap density. Generally, the tap density is preferably as large as possible, and no particular upper limit is set. In some embodiments, the tap density of the cathode active material in the anode mixture layer is less than 4.0 g/cm$^3$, less than 3.7 g/cm3, or less than 3.5 g/cm$^3$. When the above upper limits are set for the tap density of the cathode active material, the reduction in load characteristics can be suppressed.

The tap density of the cathode active material may be calculated in the following manner: placing 5 g to 10 g of the cathode active material powder into a 10 mL glass measuring cylinder, shaking for 200 times with a stroke length

of 20 mm, and obtaining the powder filling density (tap density).

Median particle size (D50)

When the cathode active material particles are primary particles, the median particle size (D50) of the cathode active material particles is the primary particle size of the cathode active material particles. When the primary particles of the cathode active material particles agglomerate to form secondary particles, the median particle size (D50) of the cathode active material particles is the secondary particle size of the cathode active material particles.

In some embodiments, the median particle size (D50) of the cathode active material particles is greater than 0.3 μm, greater than 0.5 μm, greater than 0.8 μm, or greater than 1.0 μm. In some embodiments, the median particle size (D50) of the cathode active material particles is less than 30 μm, less than 27 μm, less than 25 μm, or less than 22 μm. In some embodiments, the median particle size (D50) of the cathode active material particles is in a range defined by any two of the above values. When the median particle size (D50) of the cathode active material particles falls within the above ranges, a cathode active material with high tap density can be obtained, and the degradation of the performance of the electrochemical device can be suppressed. In addition, during the preparation of the cathode of the electrochemical device (that is, when the cathode active material, the conductive material, the binder and the like are slurried with a solvent and the slurry is coated to form a thin film), the formation of stripes can be prevented. Herein, by mixing two or more cathode active materials having different median particle sizes, the filling rate during the preparation of the cathode can be further improved.

The median particle size (D50) of the cathode active material particles may be measured using a laser diffraction/scattering particle size distribution measuring instrument. In the case that a LA-920 manufactured by Horiba, Ltd is used as the particle size distribution analyzer, a 0.1 wt% aqueous solution of sodium hexametaphosphate is used as the dispersion medium for the measurement, and the measurement refractive index is set to 1.24 after 5 min of ultrasonic dispersion

Average primary particle size

In the case that the primary particles of the cathode active material particles agglomerate to form secondary particles, in some embodiments, the average primary particle size of the cathode active material is greater than 0.05 μm, greater than 0.1 μm, or greater than 0.5 μm. In some embodiments, the average primary particle size of the cathode active material is less than 5 μm, less than 4 μm, less than 3 μm, or less than 2 μm. In some embodiments, the average primary particle size of the cathode active material is in a range defined by any two of the above values. When the average primary particle size of the cathode active material falls within the above ranges, the powder filling rate and the specific surface area can be ensured, the degradation of the performance of the battery can be suppressed, and suitable crystallinity can be obtained, thereby ensuring the reversibility of charging and discharging of the electrochemical device.

The average primary particle size of the cathode active material may be obtained by observing an image obtained by a scanning electron microscope (SEM): in an SEM image with a magnification of 10000x, any 50 primary particles are selected, the maximum section length between the left and right boundary of each primary particle in the horizontal direction is measured, and an average value of the maximum section length is calculated, which is defined as the average primary particle size.

Specific surface area (BET)

In some embodiments, the specific surface area (BET) of the cathode active material is greater than 0.1 $m^2/g$, greater than 0.2 $m^2/g$, or greater than 0.3 $m^2/g$. In some embodiments, the specific surface area (BET) of the cathode active material is less than 50 $m^2/g$, less than 40 $m^2/g$, or less than 30 $m^2/g$. In some embodiments, the specific surface area (BET) of the cathode active material is in a range defined by any two of the above values. When the specific surface area (BET) of the cathode active material falls within the above ranges, the performance of the electrochemical device can be ensured, and the cathode active material has good coatability.

The specific surface area (BET) of the cathode active material may be measured by using the following method: measuring the specific surface area by using a surface area meter (e.g., fully automatic surface area measuring instrument manufactured by Okura Riken), where the test sample is preliminarily dried at 150°C for 30 minutes while circulating nitrogen, and the specific surface area is then measured by a nitrogen adsorption BET single-point method utilizing a gas flow method using a nitrogen-helium mixed gas of which the relative pressure of nitrogen with respect to the atmospheric pressure is accurately adjusted to 0.3.

Cathode conductive material

The type of the cathode conductive material is not limited herein, and any known conductive material may be used. Examples of the cathode conductive material may include, but are not limited to, graphite such as natural graphite and artificial graphite, carbon black such as acetylene black, amorphous carbon such as needle coke, carbon nanotubes, graphene, and the like. The cathode conductive material may be used alone or in any combination.

In some embodiments, the content of the cathode conductive material is greater than 0.01 wt%, greater than 0.1 wt%, or greater than 1 wt% based on the total weight of the cathode mixture layer. In some embodiments, the content of the cathode conductive material is less than 50 wt%, less than 30 wt%, or less than 15 wt% based on the total weight of the cathode mixture layer. When the content of the cathode conductive material falls within the above ranges, sufficient electrical conductivity and the capacity of the electrochemical device can be ensured.

Cathode binder

The type of the cathode binder used in the preparation of the cathode mixture layer is not particularly limited. In the case of a coating method, the cathode binder may be any material that can be dissolved or dispersed in the liquid medium used in the preparation of electrodes. Examples of the cathode binder may include, but are not limited to, one or more of the following: resin-based polymers such as polyethylene, polypropylene, polyethylene terephthalate, polymethyl methacrylate, polyimide, aromatic polyamide, cellulose, nitrocellulose or the like; rubber-like polymers such as SBR (styrene-butadiene rubber), NBR (acrylonitrile-butadiene rubber), fluororubber, isoprene rubber, butadiene rubber, ethylene-propylene rubber or the like; styrene-butadiene-styrene block copolymers or hydrogenated products thereof; thermoplastic elastomeric polymers such as EPDM (ethylene-propylene-diene terpolymer), styrene-ethylene-butadiene-ethylene copolymers, styrene-isoprene-styrene block copolymers, or hydrogenated products thereof; soft resin-like polymers such as syndiotactic-1,2-polybutadiene, polyvinyl acetate, ethylene-vinyl acetate copolymers, propylene-$\alpha$-olefin copolymers and the like; fluoropolymers such as polyvinylidene fluoride (PVDF), polytetrafluoroethylene, fluorinated polyvinylidene fluoride, polytetrafluoroethylene-ethylene copolymers and the like; and polymer compositions having ionic conductivity towards alkali metal ions (especially lithium ions). The cathode binder may be used alone or in any combination.

In some embodiments, the content of the cathode binder is greater than 0.1 wt%, greater than 1 wt%, or greater than 1.5 wt% based on the total weight of the cathode mixture layer. In some embodiments, the content of the cathode binder is less than 80 wt%, less than 60 wt%, less than 40 wt%, or less than 10 wt% based on the total weight of the cathode mixture layer. When the content of the cathode binder falls within the above ranges, the cathode has good electrical conductivity and sufficient mechanical strength, and capacity of the electrochemical device can be ensured.

Solvent

The type of the solvent for forming the cathode slurry is not limited herein and may be any solvent capable of dissolving or dispersing the cathode active material, the conductive material, the cathode binder, as well as a thickener that is used if needed. Examples of the solvent for forming the cathode slurry may include any one of an aqueous solvent or an organic solvent. Examples of the aqueous medium may include, but are not limited to, water, a mixture medium of alcohol and water, and the like. Examples of the organic medium may include, but are not limited to, aliphatic hydrocarbons such as hexane; aromatic hydrocarbons such as benzene, toluene, xylene, and methyl naphthalene; heterocyclic compounds such as quinoline and pyridine; ketones such as acetone, methyl ethyl ketone, and cyclohexanone; esters such as methyl acetate and methyl acrylate; amines such as diethylene triamine and N,N-dimethylaminopropylamine; ethers such as diethyl ether, propylene oxide, and tetrahydrofuran (THF); amides such as N-methylpyrrolidone (NMP), dimethylformamide, and dimethyl acetamide; and aprotic polar solvents such as hexamethyl phosphramide and dimethyl sulfoxide.

Thickener

The thickener is generally used for adjusting the viscosity of the slurry. In the case that an aqueous medium is used, the thickener and styrene-butadiene rubber (SBR) may be used for slurrying. The type of the thickener is not particularly limited, and examples of the thickener may include, but are not limited to, carboxymethyl cellulose, methyl cellulose, hydroxymethyl cellulose, ethyl cellulose, polyvinyl alcohol, oxidized starch, phosphorylated starch, casein and salts thereof. The thickener may be used alone or in any combination.

In some embodiments, the content of the thickener is greater than 0.1 wt%, greater than 0.2 wt%, or greater than 0.3 wt% based on the total weight of the cathode mixture layer. In some embodiments, the content of the thickener is less than 5 wt%, less than 3 wt%, or less than 2 wt% based on the total weight of the cathode mixture layer. In some

embodiments, the content of the thickener is in a range defined by any two of the above values based on the total weight of the cathode mixture layer. When the content of the thickener falls within the above ranges, the cathode slurry has good coatability and the reduction in capacity and increase in resistance of the electrochemical device can be suppressed.

Content of cathode active material

In some embodiments, the content of the cathode active material is greater than 80 wt%, greater than 82 wt%, or greater than 84 wt% based on the total weight of the cathode mixture layer. In some embodiments, the content of the cathode active material is less than 99 wt% or less than 98 wt% based on the total weight of the cathode mixture layer. In some embodiments, the content of the cathode active material is in a range defined by any two of the above values based on the total weight of the cathode mixture layer. When the content of the cathode active material falls within the above ranges, the capacity of the cathode active material in the cathode mixture layer can be ensured, and the strength of the cathode can be ensured.

Density of cathode active material

For the cathode mixture layer obtained by coating and drying, densification may be performed using a manual press or a roller press in order to increase the filling density of the cathode active material. In some embodiments, the density of the cathode mixture layer is greater than 1.5 $g/cm^3$, greater than 2 $g/cm^3$, or greater than 2.2 $g/cm^3$. In some embodiments, the density of the cathode mixture layer is less than 5 $g/cm^3$, less than 4.5 $g/cm^3$, or less than 4 $g/cm^3$. In some embodiments, the density of the cathode mixture layer is in a range defined by any two of the above values. When the density of the cathode mixture layer falls within the above ranges, the electrochemical device has good charging and discharging characteristics, and the increase in resistance can be suppressed.

Thickness of cathode mixture layer

The thickness of the cathode mixture layer is a thickness of the cathode mixture layer on any one side of the cathode current collector. In some embodiments, the thickness of the cathode mixture layer is greater than 10 μm or greater than 20 μm. In some embodiments, the thickness of the cathode mixture layer is less than 500 μm or less than 450 μm.

Preparation of cathode active material

The cathode active material may be prepared by using a commonly used method for preparing an inorganic compound. To prepare a spherical or ellipsoidal cathode active material, the following preparation method may be used: dissolving or pulverizing and dispersing a raw material transition metal in a solvent such as water, adjusting the pH while stirring, preparing a spherical precursor and recovering it; after drying if needed, adding a Li source such as LiOH, $Li_2CO_3$, or $LiNO_3$, and firing at a high temperature, thus obtaining the cathode active material.

2. Cathode current collector

The type of the cathode current collector is not particularly limited, and the cathode current collector may be made of any material suitable for use as the cathode current collector. Examples of the cathode current collector may include, but are not limited to, metal materials such as aluminum, stainless steel, nickel plating, titanium, and tantalum, and carbon materials such as carbon cloth and carbon paper. In some embodiments, the cathode current collector is a metal material. In some embodiments, the cathode current collector is aluminum.

The form of the cathode current collector is not particularly limited. When the cathode current collector is a metal material, the form of the cathode current collector may include, but is not limited to, metal foil, metal cylinder, metal reel, metal plate, metal film, metal mesh, stamped metal, foamed metal, and the like. When the cathode current collector is a carbon material, the form of the cathode current collector may include, but is not limited to, carbon plate, carbon film, carbon cylinder, and the like. In some embodiments, the cathode current collector is a metal film. In some embodiments, the metal film is mesh-shaped. The thickness of the metal film is not particularly limited. In some embodiments, the thickness of the metal film is greater than 1 μm, greater than 3 μm, or greater than 5 μm. In some embodiments, the thickness of the metal film is less than 1 mm, less than 100 μm, or less than 50 μm. In some embodiments, the thickness of the metal film is in a range defined by any two of the above values.

In order to reduce the electrical contact resistance of the cathode current collector and the cathode mixture layer, the cathode current collector may include a conductive auxiliary agent on its surface. Examples of the conductive auxiliary agent may include, but are not limited to, carbon and noble metals such as gold, platinum, and silver.

A thickness ratio between the cathode current collector and the cathode mixture layer is the ratio of the thickness of the cathode mixture layer of the single side before the injection of the electrolyte to the thickness of the cathode current collector, and its value is not particularly limited. In some embodiments, the thickness ratio between the cathode current collector and the cathode mixture layer is less than 20, less than 15, or less than 10. In some embodiments, the thickness ratio between the cathode current collector and the cathode mixture layer is greater than 0.5, greater than 0.8, or greater than 1. In some embodiments, the thickness ratio between the cathode current collector and the cathode mixture layer is in a range defined by any two of the above values. When the thickness ratio between the cathode current collector and the cathode mixture layer falls within the above ranges, heat generation in the cathode current collector during high-current-density charging and discharging can be suppressed, and the capacity of the electrochemical device can be ensured.

3. Composition and preparation of cathode

The cathode may be prepared by forming, on a current collector, a cathode mixture layer containing a cathode active material and a binder. The cathode using the cathode active material may be prepared by a conventional method: dry mixing a cathode active material and a binder (and a conductive material and a thickener if needed) to form flakes, and pressing the obtained flakes on a cathode current collector; or dissolving or dispersing the material in a liquid medium to form a slurry, coating the slurry on a cathode current collector, and drying to form a cathode mixture layer on the current collector, thus obtaining the cathode.

IV. Separator

To prevent a short-circuit, a separator is generally disposed between the cathode and the anode. In this case, the electrolyte of the present application generally infiltrates to the separator.

The material and shape of the separator are not particularly limited, as long as the effect of the present application is not significantly compromised. The separator may be formed from a material stable in the electrolyte of the present application, such as resin, glass fiber, or inorganic matter. In some embodiments, the separator is in the form of a porous sheet or a nonwoven fabric which has excellent liquid-retaining ability. Examples of the material of a resin or glass-fiber separator include polyolefins, aromatic polyamide, polytetrafluoroethylene, polyether sulfone, glass filters, and the like. In some embodiments, the material of the separator is a glass filter. In some embodiments, the polyolefin is polyethylene and polypropylene. In some embodiments, the polyolefin is polypropylene. The materials of the separator may be used alone or in any combination.

The separator may also be a laminate of the above materials. Examples of the separator include, but are not limited to, a three-layer separator including a polypropylene layer, a polyethylene layer, and a polypropylene layer in sequence.

Examples of the inorganic matter may include, but are not limited to, oxides such as alumina and silica, nitrides such as aluminum nitride and silicon nitride, and sulfates (e.g., barium sulfate and calcium sulfate). The form of the inorganic matter may include, but is not limited to, granules or fibers.

The separator is in the form of a thin film such as a nonwoven fabric, a woven fabric, or a microporous film. In the form of a thin film, the separator has a pore size of 0.01 μm to 1 μm and a thickness of 5 μm to 50 μm. In addition to the form of the above separate thin film, the separator may have a structure in which a composite porous layer containing particles of the above inorganic matter is formed on the surface of the cathode and/or the surface of the anode using a resin binder. For example, alumina particles having a 90% particle size of less than 1 μm are applied to the respective surfaces of the cathode with fluororesin used as a binder to form a porous layer.

The thickness of the separator is arbitrary. In some embodiments, the thickness of the separator is greater than 1 μm, greater than 5 μm, or greater than 8 μm. In some embodiments, the thickness of the separator is less than 50 μm, less than 40 μm, or less than 30 μm. In some embodiments, the thickness of the separator is in a range defined by any two of the above values. When the thickness of the separator falls within the above ranges, the insulating property and mechanical strength can be ensured, and the rate performance and energy density of the electrochemical device can be ensured.

When a porous material such as a porous sheet or a nonwoven fabric is used as the separator, the porosity of the separator is arbitrary. In some embodiments, the porosity of the separator is greater than 20%, greater than 35%, or greater than 45%. In some embodiments, the porosity of the separator is less than 90%, less than 85%, or less than 75%. In some embodiments, the porosity of the separator is in a range defined by any two of the above values. When the porosity of the separator falls within the above ranges, the insulating property and mechanical strength can be ensured, and the film resistance can be suppressed, so that the electrochemical device has good rate performance.

The average pore size of the separator is also arbitrary. In some embodiments, the average pore size of the separator is less than 0.5 μm or less than 0.2 μm. In some embodiments, the average pore size of the separator is

greater than 0.05 μm. In some embodiments, the average pore size of the separator is in a range defined by any two of the above values. When the average pore size of the separator is beyond the above ranges, a short circuit easily occurs. When the average pore size of the separator falls within the above ranges, the film resistance can be suppressed while preventing a short circuit, so that the electrochemical device has good rate performance.

V. Electrochemical device assembly

The electrochemical device assembly includes an electrode group, a current-collecting structure, an outer shell and a protection element.

Electrode assembly

The electrode group may be either a laminated structure formed by laminating the cathode and the anode with the separator in between or a structure formed by spirally winding the cathode and the anode with the separator in between. In some embodiments, the proportion of the volume of the electrode group in the battery internal volume (hereinafter referred to as an electrode group proportion) is greater than 40% or greater than 50%. In some embodiments, the electrode group proportion is less than 90% or less than 80%. In some embodiments, the electrode group proportion is in a range defined by any two of the above values. When the electrode group proportion falls within the above ranges, the capacity of the electrochemical device can be ensured, the degradation of charge and discharge repeatability and high-temperature storage performance accompanying the internal pressure rise can be suppressed, and operation of a gas-releasing valve can be avoided.

Current-collecting structure

The current-collecting structure is not particularly limited. In some embodiments, the current-collecting structure is a structure which reduces resistance at wiring portions and joining portions. When the electrode group is the above laminated structure, a structure formed by bundling the metal core portions of the respective electrode layers and welding the bundled portions to terminals is suitable for use as the current-collecting structure. Because internal resistance increases as the area of one electrode increases, it is appropriate to dispose two or more terminals in the electrode to reduce resistance. When the electrode group is the above wound structure, two or more lead structures may be disposed on each of the cathode and the anode and bundled to terminals, so as to reduce internal resistance.

Outer shell

The material of the outer shell is not particularly limited and may be any material stable in the electrolyte used. The outer shell may be made of, for example, but is not limited to, a metal such as a nickel-plated steel plate, stainless steel, aluminum, an aluminum alloy, or a magnesium alloy, or a laminate film of resin and aluminum foil. In some embodiments, the outer shell is made of a metal such as aluminum or an aluminum alloy, or a laminate film.

Outer shells made of metal may have, for example, but are not limited to, a sealed-up structure formed by welding the metal by laser welding, resistance welding, or ultrasonic welding or a caulking structure using the metal via a resin gasket. Outer shells made of a laminate film may have, for example, but are not limited to, a sealed-up structure formed by hot-melting the resin layers. In order to improve the sealability, a resin which is different from the resin of the laminate film may be disposed between the resin layers. In the case of forming a sealed-up structure by hot-melting the resin layers via current-collecting terminals, metal and resin are to be bonded. Therefore, the resin to be disposed between the resin layers may be a resin having a polar group or a modified resin having a polar group introduced thereinto. In addition, the outer shell may have any shape, for example, may be cylindrical, square, laminated, button-type, or large-sized.

Protection element

The protection element may be a positive temperature coefficient (PTC) device, temperature fuse or thermistor whose resistance increases when abnormal heat generation occurs or an excessively large current flows, or a valve (current cut-off valve) which cuts off the current flowing in the circuit by abruptly increasing the battery internal pressure or internal temperature during abnormal heat generation. The above protection element may be an element that does not work during normal use at high current, and may also be designed to prevent abnormal heat generation or thermal runaway even if there is no protection element.

VI. Application

The electrochemical device of the present application includes any device where an electrochemical reaction takes place, and specific examples include all kinds of primary batteries, secondary batteries, fuel cells, solar cells, or capacitors. In particular, the electrochemical device is a lithium secondary battery including a lithium metal secondary battery, a lithium ion secondary battery, a lithium polymer secondary battery or a lithium ion polymer secondary battery.

The present application further provides an electronic device including an electrochemical device according to the present application.

The use of the electrochemical device of the present application is not particularly limited and can be used in any electronic device known in the art. In some embodiments, the electrochemical device according to the present application is applicable to, without limitation, notebook computers, pen-input computers, mobile computers, e-book players, portable phones, portable fax machines, portable copiers, portable printers, head-mounted stereo headphones, video recorders, LCD TVs, portable cleaners, portable CD players, minidisc players, transceivers, electronic notebooks, calculators, memory cards, portable recorders, radios, backup power sources, motors, vehicles, motorcycles, scooters, bicycles, lighting apparatus, toys, game consoles, clocks, electric tools, flash lights, cameras, large batteries for household use, and lithium ion capacitors.

Hereinafter, a lithium ion battery is taken as an example and the preparation of a lithium ion battery is described in conjunction with specific embodiments. Those skilled in the art will understand that the preparation methods described in the present application are merely exemplary, and any other suitable preparation methods also fall within the protection scope of the present application.

## Examples

The performance evaluation of the lithium ion batteries in the examples of the present application and comparative examples is described below.

### I. Preparation of lithium-ion battery

1. Preparation of anode:

Artificial graphite, styrene-butadiene rubber, and carboxymethyl cellulose sodium were mixed at a mass ratio of 96%:2%:2% with deionized water, and then 2000 ppm of an auxiliary agent was added and stirred evenly to obtain an anode slurry. A 12 μm copper foil was coated with the anode slurry, dried, cold-pressed, and then subjected to slice cutting and tab welding to obtain an anode. The anode was configured in accordance with the conditions in the following examples and comparative examples so that the anode has corresponding parameters.

Auxiliary agents used in the following examples are as follows:

| | **Name (product name)** |
|---|---|
| Auxiliary agent 1 | Trisiloxane surfactant (CAS No. 3390-61-2; 28855-11-0) |
| Auxiliary agent 2 | Silicone surfactant (Sylgard 309) |
| Auxiliary agent 3 | Hydroxy-terminated polydimethylsiloxane (PMX-0156) |
| Auxiliary agent 4 | N-β-(aminoethyl)-Y-aminopropyl methyl dimethoxysilane (KH-602) |
| Auxiliary agent 5 | Dimethicone (CAS No. 63148-62-9) |

2. Preparation of cathode:

$LiCoO_2$, conductive material (Super-P) and polyvinylidene fluoride (PVDF) were mixed at a mass ratio of 95%:2%:3% with N-methylpyrrolidone (NMP), and stirred evenly to obtain a cathode slurry. 12 μm aluminum foil was coated with the cathode slurry, dried, cold-pressed, and then subjected to slice cutting and tab welding to obtain a cathode.

(3) Preparation of electrolyte

Under a dry argon atmosphere, EC, PC and DEC were mixed (at a weight ratio of 1:1:1), and $LiPF_6$ was added and mixed evenly to form a base electrolyte, where the concentration of $LiPF_6$ was 1.15 mol/L. Different amounts of additive were added to the base electrolyte to obtain electrolytes of different embodiments and comparative examples.

4. Preparation of separator

A polyethylene (PE) porous polymer film was used as a separator.

5. Preparation of lithium ion battery

The obtained cathode electrode, anode and separator were wound in order, and placed in outer packaging foil, leaving a liquid injection port. The lithium-ion battery was obtained by injecting the electrolyte into the liquid injection port, performing packaging, and then performing processes such as formation and capacity.

**II. Test methods**

1. Test method for area of lithium precipitation of the anode mixture layer

At 12°C, the lithium-ion battery was charged at a constant current of 1 C to 4.45 V, then charged at a constant voltage to a current of 0.05 C, and discharged at a constant current of 1 C to 3.0 V, which was the first cycle. The lithium-ion battery was cycled 100 times in accordance with the above conditions. The area of lithium precipitation of the anode mixture layer may be obtained by the following method: providing a fully charged battery, disassembling the battery to obtain the anode, where golden yellow indicates a normal region and white indicates a lithium precipitation region, photographing with a high-magnification (20x or more) microscope, analyzing the different regions, abstracting the white region into a circle, and analyzing the lithium precipitation region by using the difference in gray level, to obtain the lithium precipitation area.

2. Test method for electrode thickness expansion rate of lithium-ion battery

At 12°C, the lithium-ion battery was charged at a constant current of 1 C to 4.45 V, then charged at a constant voltage to a current of 0.05 C, and discharged at a constant current of 1 C to 3.0 V, which was the first cycle. The lithium-ion battery was cycled 20 times in accordance with the above conditions. The electrode thicknesses before and after cycle were measured using a microcalliper. The electrode thickness expansion rate was calculated by the following equation:

$$\text{Electrode thickness expansion rate} = [(\text{thickness after cycle} - \text{thickness before cycle})/\text{thickness before cycle}] \times 100\%$$

3. Test method for thickness expansion rate of lithium-ion battery

At 12°C, the lithium-ion battery was charged at a constant current of 1 C to 4.45 V, then charged at a constant voltage to a current of 0.05 C, and discharged at a constant current of 1 C to 3.0 V, which was the first cycle. The lithium-ion battery was cycled 20 times in accordance with the above conditions. The battery thicknesses before and after cycle were measured using a height gauge. The thickness expansion rate was calculated by the following equation:

$$\text{Thickness expansion rate} = [(\text{thickness after cycle} - \text{thickness before cycle})/\text{thickness before cycle}] \times 100\%$$

4. Test method for low-temperature storage performance of lithium ion battery

At 0°C, the lithium-ion battery was charged at a constant current of 1 C to 4.45 V, then charged at a constant voltage to a current of 0.05 C, and discharged at a constant current of 1 C to 3.0 V, which was the first cycle. The lithium-ion battery was cycled 20 times in accordance with the above conditions. The low-temperature capacity retention rate of the lithium-ion battery was calculated by the following equation:

$$\text{Low-temperature capacity retention ratio} = [(\text{capacity after cycle} / \text{capacity before cycle})/\text{capacity before cycle}] \times 100\%.$$

5. Test method for thickness expansion rate of lithium-ion battery after high-temperature storage

At 25°C, the lithium-ion battery was allowed to stand for 30 minutes, then charged at a constant current of 0.5 C to 4.45 V, charged at a constant voltage of 4.45 V to 0.05 C, and allowed to stand for 5 minutes, and the thickness was measured. After storage at 60°C for 21 days, the thickness of the battery was measured. The thickness expansion rate of the lithium-ion battery after high-temperature storage was calculated by the following equation:

$$\text{Thickness expansion rate after high-temperature storage} = [(\text{thickness after storage - thickness before storage})/\text{thickness before storage}] \times 100\%.$$

**III. Test results**

Table 1 shows the area of lithium precipitation of the anode mixture layer and the components in the electrolyte in the examples and comparative examples as well as the electrode thickness expansion rate and the battery thickness expansion rate of the lithium-ion battery. An auxiliary agent 1 is used in the examples of Table 1.

Table 1

| | Electrolyte | | Area of lithium precipitation | Electrode thickness expansion rate | Battery thickness expansion rate |
|---|---|---|---|---|---|
| | Components | Content (wt%) | | | |
| Comparative Example 1 | / | / | 5% | 26% | 45% |
| Comparative Example 2 | / | / | 2% | 25% | 32% |
| Example 1 | Lithium monofluorophosphate | / | 1% | 19% | 25% |
| Example 2 | Lithium monofluorophosphate | / | 0.5% | 18% | 23% |
| Example 3 | Lithium monofluorophosphate | / | 0.1% | 17% | 22% |
| Example 4 | $L_1PO_2F_2$ | 0.5 | 0.1% | 16.5% | 18% |
| Example 5 | $LiPO_2F_2$ | 2 | 0.1% | 16.1% | 15% |
| Example 6 | T3P | 0.5 | 0.1% | 15.9% | 17% |
| Example 7 | T3P | 1 | 0.1% | 15.4% | 13% |
| Example 8 | Formula 2a | 1 | 0.1% | 12.2% | 9% |
| Example 9 | Formula 1a | 1 | 0.1% | 10.5% | 7% |

As shown in the Comparative Example 1, when the area of lithium precipitation of the anode mixture layer is greater than 2% and the electrolyte does not contain a phosphorus- and oxygen-containing compound, the electrode thickness expansion rate and the battery thickness expansion rate of the lithium-ion battery are high. As shown in the Comparative Example 2, when the area of lithium precipitation of the anode mixture layer is 2% and the electrolyte does not contain a phosphorus- and oxygen-containing compound, the electrode thickness expansion rate and the battery thickness expansion rate of the lithium-ion battery are still high. As shown in Examples 1-9, when the area of lithium precipitation of the anode mixture layer is 2% or below and the electrolyte contains a phosphorus- and oxygen-containing

compound, the phosphorus- and oxygen-containing compound can effectively improve the interface stability of the anode mixture layer, thereby significantly reducing the electrode thickness expansion rate and the battery thickness expansion rate of the lithium-ion battery, and improving the safety performance of the lithium-ion battery.

Table 2 shows the influence of the characteristics of the carbon material in the anode mixture layer on the electrode thickness expansion rate and the battery thickness expansion rate of the lithium-ion battery. Except for the parameters listed in Table 2, all settings of Examples 10-20 are the same as those of Example 9, and the auxiliary agent 1 is used in all the examples.

Table 2

| | Specific surface area ($m^2/g$) | D50 (μm) | Having amorphous carbon on the surface? | Electrode thickness expansion rate | Battery thickness expansion rate |
|---|---|---|---|---|---|
| Example 9 | 5 | 20 | No | 10.5% | 7% |
| Example 10 | 3 | 20 | No | 10.2% | 6.8% |
| Example 11 | 3 | 15 | No | 10% | 6.5% |
| Example 12 | 3 | 10 | No | 9.6% | 6.2% |
| Example 13 | 3 | 20 | Yes | 8.5% | 5.9% |
| Example 14 | 1.5 | 20 | Yes | 8.2% | 5.6% |
| Example 15 | 1.2 | 15 | Yes | 7.5% | 5.1% |
| Example 16 | 1.5 | 10 | Yes | 7% | 4.5% |
| Example 17 | 3 | 5 | No | 12.3% | 8.2% |
| Example 18 | 3 | 30 | No | 14% | 9.1% |
| Example 19 | 3 | 50 | No | 16.6% | 12.5% |
| Example 20 | 10 | 50 | No | 18.5% | 13.9% |

As shown in Table 2, the carbon material in the anode mixture layer has the following characteristics: having a specific surface area of less than 5 $m^2/g$; having a median particle size of 5 μm to 30 μm; and/or having amorphous carbon on the surface. When the carbon material in the anode mixture layer has the above characteristics, the electrode thickness expansion rate and the battery thickness expansion rate of the lithium-ion battery are further significantly reduced.

Table 3 shows the influence of the characteristics of the anode mixture layer on the electrode thickness expansion rate and the battery thickness expansion rate of the lithium-ion battery. Except for the parameters listed in Table 3, all settings of Examples 21-32 are the same as those of Example 8, and the auxiliary agent 1 is used in all the embodiments.

Table 3

| | Thickness of anode mixture layer (μm) | Porosity of anode mixture layer | Height for ball impact (cm) | Electrode thickness expansion rate | Battery thickness expansion rate |
|---|---|---|---|---|---|
| Example 8 | 120 | 20% | 50 | 12.2% | 9% |
| Example 21 | 200 | 20% | 30 | 12.5% | 9.3% |
| Example 22 | 200 | 40% | 30 | 13.1% | 9.5% |
| Example 23 | 200 | 40% | 50 | 14.2% | 9.1% |
| Example 24 | 120 | 40% | 50 | 11.8% | 8.6% |
| Example 25 | 100 | 20% | 60 | 10.5% | 8% |
| Example 26 | 100 | 20% | 80 | 8.6% | 7.5% |
| Example 27 | 100 | 20% | 100 | 8.2% | 7% |
| Example 28 | 300 | 20% | 50 | 15.2% | 10.8% |
| Example 29 | 120 | 10% | 50 | 14.6% | 9.7% |
| Example 30 | 120 | 60% | 50 | 13.2% | 8.1% |
| Example 31 | 120 | 70% | 50 | 9.2% | 15.8% |
| Example 32 | 300 | 70% | 30 | 10.2% | 11.7% |

As shown in Examples 8 and 21-32, the anode mixture layer has the following characteristics: having a thickness of not greater than 200 μm; having a porosity of 10% to 60%; and/or a height for ball impact of 50 cm or above (where the height is a minimum height from which a ball having a diameter of 15 mm and a weight of 12 g falls onto the anode mixture layer to cause the formation of cracks on the anode mixture layer). When the anode mixture layer has the above characteristics, the electrode thickness expansion rate and the battery thickness expansion rate of the lithium-ion battery are significantly reduced.

Table 4 shows the influence of the auxiliary agent in the anode mixture layer on the low-temperature capacity retention rate and the thickness expansion rate after high-temperature storage of the lithium-ion battery. Examples 33-40 in Table 4 differ from Example 9 only in the type and content of the auxiliary agent.

Table 4

| | Auxiliary agent | | Low-temperature capacity retention rate | Thickness expansion rate after high-temperature storage |
|---|---|---|---|---|
| | Components | Content (ppm) | | |
| Example 9 | Auxiliary agent 1 | 5000 | 88% | 12.5% |

(continued)

| | Auxiliary agent | | Low-temperature capacity retention rate | Thickness expansion rate after high-temperature storage |
|---|---|---|---|---|
| | Components | Content (ppm) | | |
| Example 33 | Auxiliary agent 2 | 5000 | 89% | 13.1% |
| Example 34 | Auxiliary agent 3 | 5000 | 86% | 10.9% |
| Example 35 | Auxiliary agent 4 | 5000 | 88% | 11.2% |
| Example 36 | Auxiliary agent 5 | 5000 | 88% | 12% |
| Example 37 | Auxiliary agent 1 | 3000 | 88% | 11% |
| Example 38 | Auxiliary agent 1 | 2000 | 90% | 10% |
| Example 39 | Auxiliary agent 1 | 1000 | 91% | 6% |
| Example 40 | Auxiliary agent 1 | 500 | 88% | 9% |

The results show that any type of auxiliary agent may be used as long as the area of lithium precipitation of the surface of the anode mixture layer is 2% or below. When the content of the auxiliary agent is 3000 ppm or below based on the total weight of the anode mixture layer, the interface stability of the anode mixture layer can be further improved, improving the low-temperature capacity retention rate and the thickness expansion rate after high-temperature storage of the lithium-ion battery, thereby improving the storage performance of the lithium-ion battery.

Throughout the specification, references to "embodiment", "part of the embodiments", "one embodiment", "another example", "example", "specific example" or "part of the examples" mean that at least one embodiment or example of the present application includes specific features, structures, materials or characteristics described in the embodiment or example. Thus, the descriptions which appear throughout the specification, such as "in some embodiments", "in an embodiment", "in one embodiment", "in another example", "in one example", "in a specific example" or "an example", do not necessarily refer to the same embodiment or example in the present application. Furthermore, the particular features, structures, materials or characteristics herein may be combined in any suitable manner in one or more embodiments or examples.

Although illustrative embodiments have been shown and described, it should be understood by those skilled in the art that the above embodiments cannot be interpreted as limitations to the present application, and the embodiments can be changed, substituted and modified without departing from the spirit, principle and scope of the present application.

## Claims

**1.** An electrochemical device, comprising:

a cathode;
an electrolyte; and
an anode,
wherein,
the electrolyte comprises a phosphorus and oxygen containing compound, and
the anode comprises an anode current collector and an anode mixture layer formed on the anode current collector, and after 100 charge and discharge cycles, an area of lithium precipitation of a surface of the anode mixture layer is 2% or below based on a total surface area of the anode mixture layer.

2. The electrochemical device according to claim 1, wherein the electrolyte comprises at least one of the following compounds:

(a) lithium monofluorophosphate;
(b) lithium difluorophosphate;
(c) phosphate;
(d) phosphocyclic anhydride; or
(e) the compound of Formula 1:

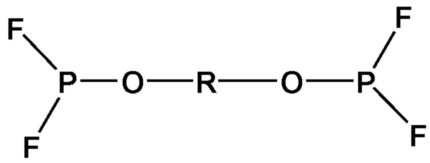
Formula 1;

wherein R is substituted or unsubstituted $C_1$-$C_{10}$ hydrocarbyl, wherein when substituted, the substituent is halo.

3. The electrochemical device according to claim 2, wherein the electrolyte comprises the compound of Formula 1, and the compound of Formula 1 comprises at least one of the following structural formulas:

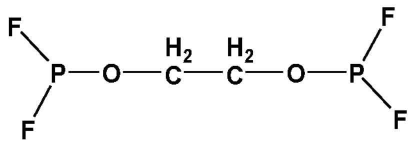
Formula 1a;

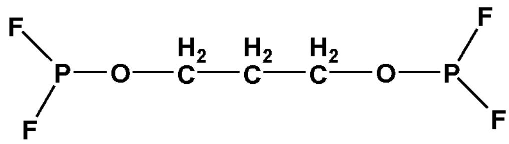
Formula 1b;

or

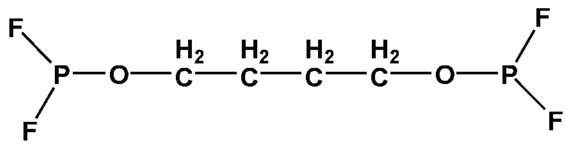
Formula 1c.

4. The electrochemical device according to claim 2, wherein the electrolyte comprises the phosphate, and the phosphate has the structure of Formula 2:

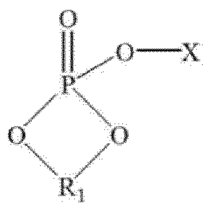
Formula 2;

wherein X is a linear or non-linear alkyl group having 1 to 5 carbon atoms or $-SiR_2R_3R_4$; wherein $R_2$, $R_3$, and $R_4$ are each independently an alkyl group having 1 to 5 carbon atoms, and
$R_1$ is an alkylene group having 2 to 3 carbon atoms and substituted with a substituent selected from the following: at least one fluorine atom or an alkyl group containing at least one fluorine atom and having 1 to 3 carbon atoms.

5. The electrochemical device according to claim 1, wherein a content of the phosphorus- and oxygen-containing

compound is 0.001 wt% to 10 wt% based on a total weight of the electrolyte.

6. The electrochemical device according to claim 1, wherein the anode mixture layer comprises a carbon material, and the carbon material has at least one of the following characteristics:

(a) a specific surface area of less than 5 $m^2/g$;
(b) a median particle size of 5 μm to 30 μm; and
(c) amorphous carbon on a surface.

7. The electrochemical device according to claim 1, wherein the anode mixture layer has at least one of the following characteristics:

(a) a thickness of not greater than 200 μm;
(b) a porosity of 10% to 60%; and
(c) a minimum height from which a ball having a diameter of 15 mm and a weight of 12 g falls onto the anode mixture layer to cause formation of cracks on the anode mixture layer being 50 cm or above.

8. The electrochemical device according to claim 1, wherein the anode mixture layer comprises an auxiliary agent, and the auxiliary agent has at least one of the following characteristics:

(a) comprises polyether siloxane;
(b) an oxidation potential of not less than 4.5 V and a reductive potential of not greater than 0.5 V; and
(c) a surface tension of an aqueous solution containing 0.1 wt% of the auxiliary agent being not greater than 30 mN/m.

9. The electrochemical device according to claim 1, wherein based on a total weight of the anode mixture layer, a content of the auxiliary agent is 3000 ppm or below.

10. An electronic device, comprising the electrochemical device according to any one of claims 1 to 9.

**INTERNATIONAL SEARCH REPORT**

International application No. **PCT/CN2019/128445**

**A. CLASSIFICATION OF SUBJECT MATTER**

H01M 10/056(2010.01)i; H01M 4/583(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 锂, 电池, 电化学装置, 正极, 负极, 电解液, 磷, 氧, 析锂面积, 磷酸酯, -OPF2, lithium, battery, electrochemical, device, positive, negative, electrolyte, P, O, lithium, precipitation, area, phosphate, ester

**C. DOCUMENTS CONSIDERED TO BE RELEVANT**

| Category* | Citation of document, with indication, where appropriate, of the relevant passages | Relevant to claim No. |
|---|---|---|
| X | CN 109860703 A (NINGDE AMPEREX TECHNOLOGY LTD.) 07 June 2019 (2019-06-07) description, paragraphs 0045-0158 | 1-2, 5-7, 10 |
| Y | CN 109860703 A (NINGDE AMPEREX TECHNOLOGY LTD.) 07 June 2019 (2019-06-07) description, paragraphs 0045-0158 | 3-4, 8-9 |
| Y | CN 110600801 A (SK INNOVATION CO., LTD.) 20 December 2019 (2019-12-20) description, paragraphs 0057-0093 | 3 |
| Y | CN 105280954 A (SHANDONG HONGZHENG BATTERY MATERIAL TECHNOLOGY CO., LTD.) 27 January 2016 (2016-01-27) description, paragraphs 0005-0022 | 4 |
| Y | CN 109037676 A (CONTEMPORARY AMPEREX TECHNOLOGY LTD.) 18 December 2018 (2018-12-18) description, paragraphs 0004-0025 | 8-9, |
| A | WO 2018099097 A1 (CONTEMPORARY AMPEREX TECHNOLOGY CO., LIMITED) 07 June 2018 (2018-06-07) entire document | 1-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 September 2020** | **28 September 2020** |

Name and mailing address of the ISA/CN

**China National Intellectual Property Administration (ISA/CN)**
**No. 6, Xitucheng Road, Jimenqiao, Haidian District, Beijing 100088**
**China**

Facsimile No. **(86-10)62019451**

Authorized officer

Telephone No.

Form PCT/ISA/210 (second sheet) (January 2015)

**INTERNATIONAL SEARCH REPORT**

International application No.
**PCT/CN2019/128445**

**C. DOCUMENTS CONSIDERED TO BE RELEVANT**

| Category* | Citation of document, with indication, where appropriate, of the relevant passages | Relevant to claim No. |
|---|---|---|
| A | CN 109301330 A (ZHUHAI COSLIGHT BATTERY CO., LTD.) 01 February 2019 (2019-02-01)<br>entire document | 1-10 |
| A | CN 108365265 A (ZHONGSHAN HONGYI NEW MATERIAL CO., LTD.) 03 August 2018 (2018-08-03)<br>entire document | 1-10 |

Form PCT/ISA/210 (second sheet) (January 2015)

**INTERNATIONAL SEARCH REPORT**
**Information on patent family members**

International application No.
**PCT/CN2019/128445**

| Patent document cited in search report | | | Publication date (day/month/year) | Patent family member(s) | | | Publication date (day/month/year) |
|---|---|---|---|---|---|---|---|
| CN | 109860703 | A | 07 June 2019 | None | | | |
| CN | 110600801 | A | 20 December 2019 | KR | 20190140676 | A | 20 December 2019 |
| | | | | US | 2019379086 | A1 | 12 December 2019 |
| CN | 105280954 | A | 27 January 2016 | None | | | |
| CN | 109037676 | A | 18 December 2018 | None | | | |
| WO | 2018099097 | A1 | 07 June 2018 | EP | 3550657 | A1 | 09 October 2019 |
| | | | | US | 2019267671 | A1 | 29 August 2019 |
| | | | | CN | 108123172 | A | 05 June 2018 |
| CN | 109301330 | A | 01 February 2019 | WO | 2020098238 | A1 | 22 May 2020 |
| CN | 108365265 | A | 03 August 2018 | None | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS,* 3390-61-2
- *CHEMICAL ABSTRACTS,* 63148-62-9